# EUROPEAN PATENT SPECIFICATION

(11) **EP 3 935 801 B1**
(45) Date of publication and mention of the grant of the patent: **15.10.2025**
(21) Application number: 20706718.2
(22) Date of filing: 24.02.2020
(51) Int. Cl.: H04L 9/40, H04W 12/08, H04W 12/75

(54) **AUTHENTICATION DECISION FOR FIXED NETWORK RESIDENTIAL GATEWAYS**
AUTHENTIFIZIERUNGSENTSCHEIDUNG FÜR FESTNETZ-HEIM-GATEWAYS
DÉCISION D'AUTHENTIFICATION POUR PASSERELLES RÉSIDENTIELLES DE RÉSEAU FIXE

(30) Priority: 04.03.2019 US 201962813279 P
(43) Date of publication of application: 12.01.2022
(73) Proprietor: Telefonaktiebolaget LM Ericsson (publ), 164 83 Stockholm (SE)
(72) Inventor: JOST, Christine, 223 51 Lund (SE); LEHTOVIRTA, Vesa, 02620 Espoo (FI); BEN HENDA, Noamen, 162 47 Vällingby (SE); VAHIDI MAZINANI, Helena, 245 92 Staffanstorp (SE)
(74) Representative: Ericsson
(86) International application number: PCT/EP2020/054750
(87) International publication number: WO 2020/178055

(56) References cited:
- ERICSSON ET AL: "Updates on solution #28 - Line Id Transfer to and usage within 5GC", vol. SA WG2, no. West Palm Beach, USA; 20181126 - 20181130, 29 November 2018 (2018-11-29), XP051564009, Retrieved from the Internet <URL:http://www.3gpp.org/ftp/Meetings%5F3GPP%5FSYNC/SA2/Docs/S2%2D1812501%2Ezip> [retrieved on 20181129]
- "3rd Generation Partnership Project; Technical Specification Group Services and System Aspects; Study on the security of the Wireless and Wireline Convergence for the 5G system architecture (Release 16)", 3GPP STANDARD; TECHNICAL REPORT; 3GPP TR 33.807, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V0.3.0, 12 February 2019 (2019-02-12), pages 1 - 25, XP051722633
- HUAWEI ET AL: "Impacts of 5WWC to CT WGs", vol. CT WG4, no. Montreal, Canada; 20190225 - 20190301, 18 February 2019 (2019-02-18), XP051598822, Retrieved from the Internet <URL:http://www.3gpp.org/ftp/tsg%5Fct/WG4%5Fprotocollars%5Fex%2DCN4/TSGCT4%5F89%5FMontreal/Docs/C4%2D190324%2Ezip> [retrieved on 20190218]
- ERICSSON (TO BE SA3): "[DRAFT] Reply-LS on FN-RG authentication and related questions", vol. SA WG3, no. Kochi (India); 20190128 - 20190201, 21 January 2019 (2019-01-21), XP051611357, Retrieved from the Internet <URL:http://www.3gpp.org/ftp/tsg%5Fsa/WG3%5FSecurity/TSGS3%5F94%5FKochi/Docs/S3%2D190081%2Ezip> [retrieved on 20190121]
- CABLELABS ET AL: "Mobility restrictions for wireline cable access", vol. SA WG2, no. Santa Cruz-Tenerife, Spain; 20190225 - 20190301, 19 February 2019 (2019-02-19), XP051610434, Retrieved from the Internet <URL:http://www.3gpp.org/ftp/tsg%5Fsa/WG2%5FArch/TSGS2%5F131%5FTenerife/Docs/S2%2D1901848%2Ezip> [retrieved on 20190219]

## Description

### TECHNICAL FIELD

The present disclosure relates generally to communications, and more particularly, to wireless communications and related wireless devices and network nodes.

### BACKGROUND

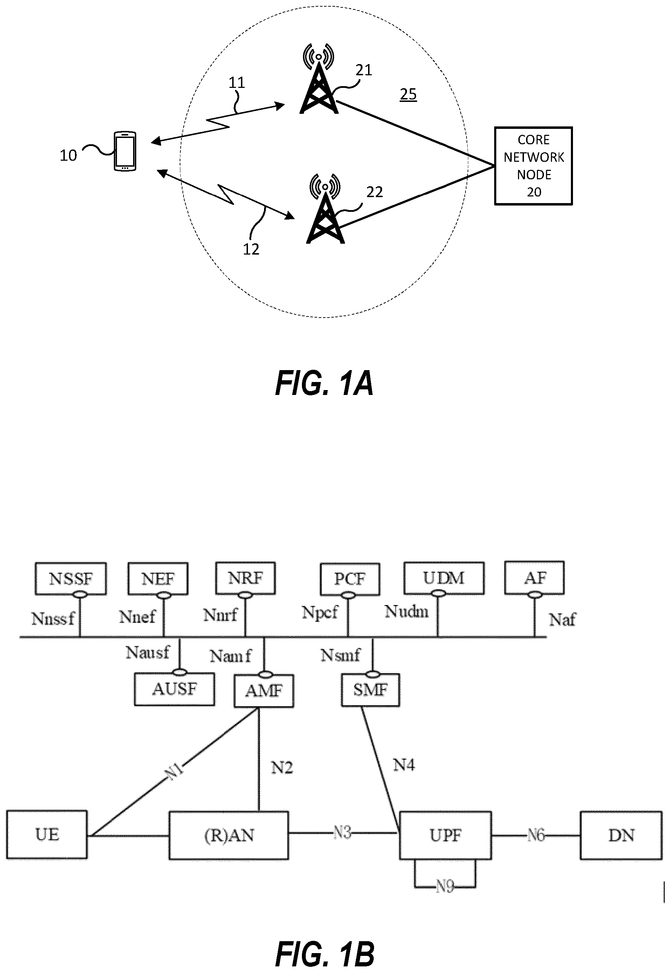

A simplified wireless communication system is illustrated in **Figure 1A****.** The system includes a UE 10 that communicates with one or more access nodes 21, 22 using radio connections 11, 12. The access nodes 21, 22 are connected to a core network node 20. The access nodes 21-22 are part of a radio access network 25.

For wireless communication systems pursuant to 3GPP Evolved Packet System, EPS (also referred to as Long Term Evolution, LTE, or 4G) standard specifications, the access nodes 21, 22 correspond typically to an Evolved NodeB (eNB) and the core network node 20 corresponds typically to either a Mobility Management Entity (MME) and/or a Serving Gateway (SGW). The eNB is part of the radio access network (RAN) 105, which in this case is the E-UTRAN (Evolved Universal Terrestrial Radio Access Network), while the MME and SGW are both part of the EPC (Evolved Packet Core network).

For wireless communication systems pursuant to 3GPP 5G System, 5GS (also referred to as New Radio, NR, or 5G) standard specifications, such as specified in [6] and related specifications, the access nodes 21-22 correspond typically to a 5G NodeB (gNB) and the network node 20 corresponds typically to either an Access and Mobility Management Function (AMF) and/or a User Plane Function (UPF). The gNB is part of the radio access network 25, which in this case is the NG-RAN (Next Generation Radio Access Network), while the AMF and UPF are both part of the 5G Core Network (5GC).

**Figure 1B** illustrates an example 5G system architecture. As shown in **Figure 1B****,** functional entities (e.g., AMF, SMF, etc.) are connected to a logical communication bus. The Access and Mobility Management Function (AMF) communicates with the radio access network (RAN) and one or more user equipments (UE), and the session management function (SMF) communicates with the user plane function (UPF). This way of modelling the system is also known as "service-based architecture."

The various functions illustrated in **Figure 1B** will now be described.

The Access and Mobility Management function (AMF) supports termination of non-access stratum (NAS signalling), NAS ciphering and integrity protection, registration management, connection management, mobility management, access authentication and authorization, security context management.

The Session Management function (SMF) supports session management (session establishment, modification, release), UE IP address allocation and management, DHCP functions, termination of NAS signalling related to session management, downlink (DL) data notification, and traffic steering configuration for user plane function (UPF) for proper traffic routing.

The User plane function (UPF) supports packet routing and forwarding, packet inspection, QoS handling, acts as external PDU session point of interconnect to Data Network (DN), and is an anchor point for intra- and inter-RAT mobility.

The Policy Control Function (PCF) supports unified policy framework, providing policy rules to CP functions, and access subscription information for policy decisions in UDR.

The Authentication Server Function (AUSF) acts as an authentication server.

The Unified Data Management (UDM) supports generation of Authentication and Key Agreement (AKA) credentials, user identification handling, access authorization, and subscription management.

The Application Function (AF) supports application influence on traffic routing, accessing NEF, and interaction with policy framework for policy control.

The Network Exposure function (NEF) supports exposure of capabilities and events, secure provision of information from external application to 3GPP network, and translation of internal/external information.

The NF Repository function (NRF) supports service discovery function and maintains the network function (NF) profile and available NF instances.

The Network Slice Selection Function (NSSF) supports selection of the Network Slice instances to serve the UE, determining the allowed NSSAI, and determining the AMF set to be used to serve the UE.

Wireless/wireline convergence is currently studied in 3GPP. Part of the work is connecting so-called residential gateways to the 5G core. Residential gateways (RGs) may be 5G capable (5G-RGs) or legacy gateways, namely, Fixed Network Residential Gateways (FN-RG). Residential gateways of type FN-RG may be connected only via wired access specified by the Broad Band Forum (BBF). Residential gateways of type 5G-RG may also be connected via wireless 3GPP radio access.

A 5G capable device is a device that supports the features and the mechanisms described in the 3GPP 5G specifications, such as the 5G security specification [1] which describes, for example, how the device is authenticated and how the communication between the device and the network is protected using keys derived following a successful authentication run.

The FN-RG is a legacy node specified by BBF. An FN-RG is not 5G capable, does not have 5G credentials, and cannot use the 5G authentication mechanisms described in [4], and hence cannot be authenticated by the 5G core.
Change request S2-1901848 ("Mobility restrictions for wireline cable access") discloses methods for the management of service area restrictions in wireline access. A technical submission by Huawei et al (C4-190324, "Impacts of 5WWC to CT WGs") discusses solutions for wireless and wireline convergence for the 5Gs architecture within the release 16 version of the 3GPP specifications. One solution describes the support of registration and session management of FN-RG, and identifies the need for a new type of authentication for FN-RG (namely, no authentication in 5GCN).

### SUMMARY

The invention is defined by the appended claims. Some embodiments provide a method in a United Data Management, UDM, function of a core network of a wireless communication system. The method includes receiving, at the UDM, an authentication request from a Subscriber Authentication Function, AUSF, function of the core network, the authentication request requesting authentication of a fixed network residential gateway, FN-RG and including an identifier of the FN-RG, determining, based on the identifier of the FN-RG, that authentication of the FN-RG is not required, and transmitting an authentication response to the AUSF, the authentication response including an indication that authentication of the FN-RG is not required.

In some embodiments, the identifier of the FN-RG is included within a subscriber concealed identity, SUCI, associated with the FN-RG, and the method further includes deconcealing, by the UDM, the SUCI to obtain a subscriber permanent identity, SUPI, associated with the FN-RG.

In some embodiments, the authentication response further includes a dummy authentication vector to be used for non-access stratum communications with the core network on behalf of the FN-RG.

In some embodiments, the authentication request includes an authentication get request, and the authentication response includes an authentication get response.

A network node according to some embodiments includes a processor circuitry, a network interface coupled to the processor circuit, and a memory coupled to the processor circuit. The memory includes machine readable program instructions that, when executed by the processor circuit, cause the network node to perform operations of receiving, at the UDM, an authentication request from a Subscriber Authentication Function, AUSF, function of the core network, the authentication request requesting authentication of a fixed network residential gateway, FN-RG and including an identifier of the FN-RG, determining, based on the identifier of the FN-RG, that authentication of the FN-RG is not required, and transmitting an authentication response to the AUSF, the authentication response including an indication that authentication of the FN-RG is not required.

Some embodiments provide a computer program including program code to be executed by processing circuitry of a network node configured to operate in a communication network, whereby execution of the program code causes the network node to perform operations of receiving, at the UDM, an authentication request from a Subscriber Authentication Function, AUSF, function of the core network, the authentication request requesting authentication of a fixed network residential gateway, FN-RG and including an identifier of the FN-RG, determining, based on the identifier of the FN-RG, that authentication of the FN-RG is not required, and transmitting an authentication response to the AUSF, the authentication response including an indication that authentication of the FN-RG is not required.

Some embodiments provide a computer program product including a non-transitory storage medium including program code to be executed by processing circuitry of a network node configured to operate in a communication network, whereby execution of the program code causes the network node to perform operations of receiving, at the UDM, an authentication request from a Subscriber Authentication Function, AUSF, function of the core network, the authentication request requesting authentication of a fixed network residential gateway, FN-RG and including an identifier of the FN-RG, determining, based on the identifier of the FN-RG, that authentication of the FN-RG is not required, and transmitting an authentication response to the AUSF, the authentication response including an indication that authentication of the FN-RG is not required.

### BRIEF DESCRIPTION OF THE DRAWINGS

The accompanying drawings, which are included to provide a further understanding of the disclosure and are incorporated in a constitute a part of this application, illustrate certain non-limiting embodiments of inventive concepts. In the drawings:
**Figure 1A** illustrates a wireless communication system;
**Figure 1B** illustrates an example 5G system architecture;
**Figure 2** illustrates a procedure for registering an FN-RG to a 5G network;
**Figures 3** **and** **6** illustrate procedures for registering an FN-RG to a 5G network according to various embodiments;
**Figures 4****,** **5****,** **7** **and** **8** illustrate procedures for registering an FN-RG to a 5G network according to unclaimed embodiments;
**Figures 9-10** are flow charts illustrating operations of a core network node according to some embodiments;
**Figures 11-12** are flow charts illustrating operations of a core network node according to some unclaimed embodiments;
**Figure 13** is a block diagram illustrating an example of a core network (CN) node according to some embodiments;
**Figure 14** is a block diagram of a wireless network in accordance with some embodiments;
**Figure 15** is a block diagram of a user equipment in accordance with some embodiments
**Figure 16** is a block diagram of a virtualization environment in accordance with some embodiments;
**Figure 17** is a block diagram of a telecommunication network connected via an intermediate network to a host computer in accordance with some embodiments;
**Figure 18** is a block diagram of a host computer communicating via a base station with a user equipment over a partially wireless connection in accordance with some embodiments;
**Figure 19** is a block diagram of methods implemented in a communication system including a host computer, a base station, and a user equipment in accordance with some embodiments;
**Figure 20** is a block diagram of methods implemented in a communication system including a host computer, a base station, and a user equipment in accordance with some embodiments;
**Figure 21** is a block diagram of methods implemented in a communication system including a host computer, a base station, and a user equipment in accordance with some embodiments; and
**Figure 22** is a block diagram of methods implemented in a communication system including a host computer, a base station, and a user equipment in accordance with some embodiments.

### DETAILED DESCRIPTION

Inventive concepts will now be described more fully hereinafter with reference to the accompanying drawings, in which examples of embodiments of inventive concepts are shown. Inventive concepts may, however, be embodied in many different forms and should not be construed as limited to the embodiments set forth herein. Rather, these embodiments are provided so that this disclosure will be thorough and complete, and will fully convey the scope of present inventive concepts to those skilled in the art. It should also be noted that these embodiments are not mutually exclusive. Components from one embodiment may be tacitly assumed to be present/used in another embodiment.

The following description presents various embodiments of the disclosed subject matter. These embodiments are presented as teaching examples and are not to be construed as limiting the scope of the disclosed subject matter. For example, certain details of the described embodiments may be modified, omitted, or expanded upon without departing from the scope of the described subject matter.

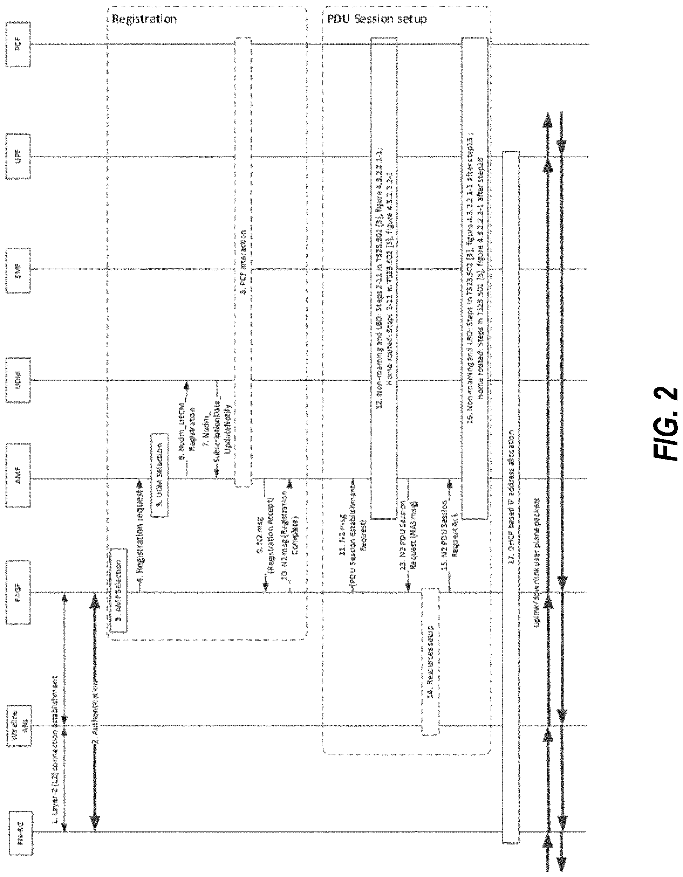

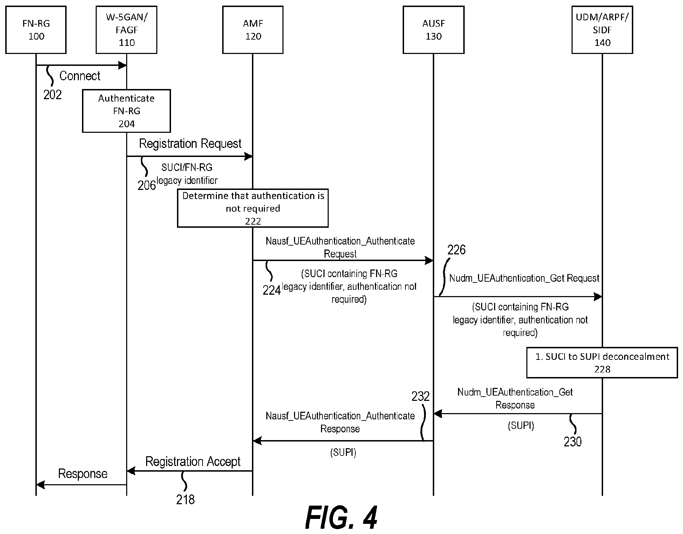

A procedure for registering an FN-RG to a 5G network is presented in [2]. The procedure is illustrated in **Figure 2****.** The procedure is described as follows:
1. A layer-2 (L2) connection is established between the 5G-RG and the Fixed Access Gateway Function (FAGF).
2. The FN-RG is authenticated by the Wireline 5G Access node (W-5GAN). This may be based e.g. on the fixed AN inserting an identifier, referred to as a line ID, into a DHCP request. If the RG has sent a request for IP addressing (DHCPv4, DHCPV6, RS) the FAGF stores it until the RG has been registered and a PDU Session established for the RG.
   [2] notes that the authentication of the FN-RG based on the trust relationship between 5GC/AMF and the access network/FAGF is to be defined.
3. The FAGF may use the line ID to get the required 5GC parameters (e.g. NSSAI) it needs to be able to send NAS signaling to 5GC (registration, PDU Session related etc.) and to perform initial AMF selection. [2] notes that the method used by the FAGF to determine these 5GC parameters is to be defined by BBF.
   The FAGF performs initial registration on behalf of the FN-RG. The NAS registration message is sent using same N2 mechanisms as defined in [5] for N3GPP access with the difference that ULI contains a different set of information (see solution 28 of [2]).
4. The FAGF sends a registration request to the AMF. The following differences exist, compared to the 5G-RG case:
   - The NSSAI is provided based on FAGF determination done in step 3.
   - The FAGF shall use the LinelD to build the SUCI that is used in the Registration request. This is further documented in solution 28 of [2].
   - The FAGF will indicate to the AMF that it has authenticated the FN-RG, no authentication is to be performed by the 5GC.
   - The FAGF shall indicate that no PEI can be provided.
   - The NAS registration message is sent using same N2 mechanisms as defined in [5] for N3GPP access with the difference that:
      - ULI contains a different set of information (see solution #28 in [2]).
      - The FAGF will indicates to the AMF that it has authenticated the FN-RG, no authentication is to be performed by the 5GC.
5. The AMF selects an AUSF based on information received in the SUCI and asks for authentication from the AUSF. This solution assumes that, no authentication is carried out and the AUSF answers with the SUPI corresponding to the subscription.
6. The AMF selects an UDM, registers to UDM, gets subscription data from UDM and subscribes to changes of subscription data as defined in step 14 of Figure 4.2.2.2.2-1 of [5].
7. The AMF creates an MM context for the FN-RG taking into account that that the registration is for W-5GAN access. The mobility and paging are not applicable.
8. The AMF interacts with the PCF for obtaining the Access and Mobility policy for the FN-RG.
9. The AMF sends Registration Accept message to the FAGF. This message contains at least a 5G-GUTI, the allowed NSSAI and a non-3GPP Deregistration timer as defined in [5] clause 5.5.
10. The FAGF send a registration complete message back to the AMF when the procedure is completed. The FAGF shall store the 5G-GUTI in order to be able to send it in potential later NAS procedures.

The existing solutions do not describe in detail how the 5G core network decides that no authentication is needed for the FN-RG, and how other functions are informed about the decision. Moreover, none of the existing solutions describes how to establish NAS security for the FN-RG.

Some embodiments provide systems and/or methods by which the AMF, AUSF or the UDM advantageously determines whether authentication is required for an FN-RG that attempts to access the 5G core network and informs the other functions, if applicable.

Some embodiments provide systems and/or methods by which NAS security is advantageously established between a W-5GAN and AMF, on behalf of the FN-RG.

Some embodiments provide systems and/or methods by which FN-RG authentication is advantageously made by the 5GC, and how other functions are informed.

Several embodiments of the inventive concepts are described below. In a first embodiment, the UDM makes the determination that authentication is not required for the FN-RG. In a second unclaimed embodiment, it is the AMF that decides that authentication is not required for the FN-RG, and in a third unclaimed embodiment, it is the AUSF that decides that authentication is not required for the FN-RG. It is also possible to combine one or more embodiments described herein. For example, in some embodiments, both AMF and UDM must determine that authentication is not required before the FN-RG can connect to the 5G network.

In a further embodiment, an additional option is described by which NAS security can be established with dummy parameters that can be combined with any of the three embodiments.

### First embodiment - Determination by UDM

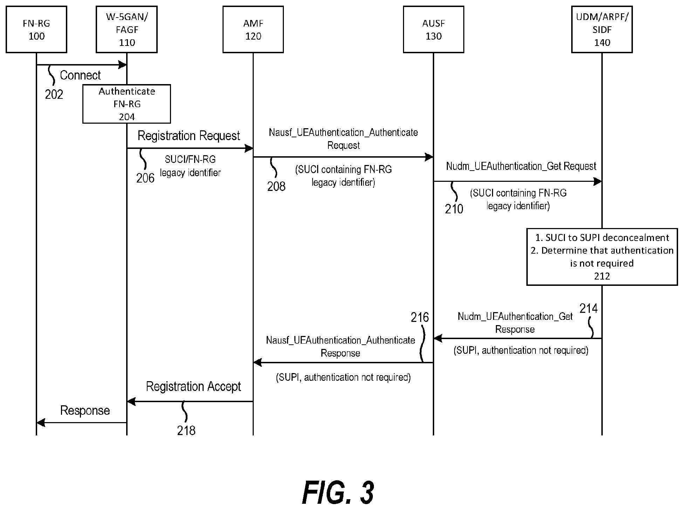

**Figure 3** illustrates a procedure for registering an FN-RG 100 to a 5G network according to a first embodiment. As shown in **Figure 3****,** an FN-RG 100 establishes a layer 2 (L2) connection 202 to a FAGF 110 that may be implemented, for example, in a W-5GAN. The FN-RG 100 is authenticated by the W-5GAN. This may be based, for example, a line ID (LineID) associated with the FN-RG 100 that is inserted to a DHCP request.

Assuming that the FN-RG 100 is authenticated based on the line ID, the FAGF 110 selects an AMF 120 and sends an initial NAS registration request 206 to the AMF 120 on behalf of the FN-RG 100. The FAGF 110 may use the line ID to obtain the required 5GC parameters (e.g. NSSAI) that are needed to be able to send NAS signaling to 5GC and to perform initial AMF selection. In particular, the FAGF 110 may use the LinelD or other identifier of the FN-RG 100 to build the SUCI that is included in the registration request. Accordingly, the SUCI may include the LinedID or other identifier of the FN-RG 110. The NAS registration message may be sent using same N2 mechanisms as defined in [5] for N3GPP access as described in [2]. The FAGF 110 may also include an indication, such as a flag, sent along with the registration request 206 or otherwise associated with the registration request 206 that indicates that authentication by the core network is not required for the FN-RG 100.

Upon receipt of the registration request 206, in the first embodiment, the AMF 120 constructs an authentication request 208 (Nausf_UEAuthentication_Authenticate Request) including the SUCI that carries the FN-RG identifier. The AMF 120 selects an AUSF based on information received in the SUCI and transmits the authentication request to the AUSF 130. The AMF 120 may interact with a PCF for obtaining the Access and Mobility policy for the FN-RG 100.

Upon receipt of the authentication request 208, in the first embodiment, the AUSF 130 constructs an authentication get request 210 (Nudm_UEAuthentication_Get Request) including the SUCI that carries the FN-RG identifier and transmits the authentication get request 210 to the UDM 140.

Upon receipt of the authentication get request 210 from the AUSF 130, the UDM 140 performs SUCI to SUPI deconcealment and determines whether or not authentication is required for the FN-RG based on the FN-RG identifier included in the request (block 212).

In some embodiments, the UDM 140 may determine that the authentication is not required based on a local configuration or based on subscription information for the FN-RG 100. In the former option, the UDM 140 may be preconfigured to indicate that the authentication is not required based on the FN-RG identifier included in the authentication get request. In the latter option, FN-RG devices entitled to be served by the network may have an associated subscription or a special profile stored in the UDM 134 (or accessible by the UDM 140). The profile associated with the FN-RG 100 may indicate that authentication is not required. This option may preserve the legacy behavior of the UDM 140, which is expected to act only based on subscription information.

The UDM 140 responds to the authentication get request with an authentication get response 214 to the AUSF 130 including the SUPI and an indication that authentication is not required for this request.

Upon receipt of the authentication get response 214, the AUSF 130 responds to the authentication request 208 from the AMF 120 with an authentication response 216 to the AMF 120 including the SUPI and an indication that authentication is not required for this request.

The AMF 120 then transmits a Registration Accept message 218 to the FAGF 110, and the FAGF 110 completes the connection to the FN-RG 100. The NAS connection of the FN-RG 100 terminates in the FAGF 110.

In the flow illustrated in **Figure 3****,** it is assumed that the usual authentication services described in [1] are used. However, it is also possible that new services with new message names are used.

### Second Unclaimed Embodiment - Determination by AMF

**Figure 4** illustrates a procedure for registering an FN-RG 100 to a 5G network according to a second unclaimed embodiment. As shown in **Figure 4****,** an FN-RG 100 establishes a layer 2 (L2) connection 202 to an FAGF 110 that may be implemented, for example, in a W-5GAN. The FN-RG 100 is authenticated by the W-5GAN (block 204). This may be based, for example, a LinelD associated with the FN-RG 100 that is inserted to a DHCP request.

Assuming that the FN-RG 100 is authenticated based on the line ID, the FAGF 110 selects an AMF 120 and sends an initial NAS registration request 206 to the AMF 120 on behalf of the FN-RG 100. The FAGF 110 may use the line ID to obtain the required 5GC parameters (e.g. NSSAI) that are needed to be able to send NAS signaling to 5GC and to perform initial AMF selection. In particular, the FAGF 110 may use the LinelD or other identifier of the FN-RG 100 to build the SUCI that is included in the registration request 206. Accordingly, the SUCI may include the LinedID or other identifier of the FN-RG 100. The NAS registration message 206 may be sent using same N2 mechanisms as defined in [5] for N3GPP access as described in [2].

Upon receipt of the registration request 206, in some embodiments, the AMF 120 determines whether or not authentication is required for the FN-RG 100 (block 222). In these embodiments, the AMF 120 may determine that the authentication is not required based on a local configuration. In one option, the AMF 120 may compare the received FN-RG 100 related identifier against a stored list of identifiers for devices to be served by the network with authentication. In another option, the AMF 120 may take the decision based on the origin/source (e.g. IP address or N2 security) of the registration request message 206 received from the FAGF 110.

In another option, the AMF 120 may receive information in the registration request message 206, created by the FAGF 110, that no authentication is needed (as described in Solution #23 in [2]). The AMF 120 may verify that the registration request 206 comes from a trusted FAGF 110 by verifying that the registration request 206 is received over a secure N2 interface with a trusted FAGF 110 as the other endpoint. In yet another option the AMF 120 may interact with the UDM 140 via a new procedure realized by the exchange of new messages between the AMF 120 and the UDM 140 possibly but not necessarily through the AUSF 130 in order to determine whether an authentication run is required or not.

The AMF 120 then constructs an authentication request 224 (NAUSF 130_UEAuthentication_Authenticate Request) including the SUCI that carries the FN-RG 100 identifier. The authentication request 224 also indicates that authentication is not required for this FN-RG 100. The AMF 120 selects an AUSF 130 based on information received in the SUCI and transmits the authentication request to the AUSF 130. The AMF 120 may interact with the PCF for obtaining the Access and Mobility policy for the FN-RG 100.

Upon receipt of the authentication request, in the second embodiment, the AUSF 130 constructs an authentication get request 226 (NUDM 140_UEAuthentication_Get Request) including the SUCI that carries the FN-RG 100 identifier and transmits the authentication get request 226 to the UDM 140. The authentication get request 226 also indicates that authentication is not required for this FN-RG 100.

Upon receipt of the authentication get request 226 from the AUSF 130, the UDM 140 performs SUCI to SUPI deconcealment (block 228). The UDM 140 responds to the authentication get request with an authentication get response 230 to the AUSF 130 including the SUPI.

Upon receipt of the authentication get response 230, the AUSF 130 responds to the authentication request from the AMF 120 with an authentication response 232 to the AMF 120 including the SUPI.

The AMF 120 then transmits a Registration Accept message 218 to the FAGF 110, and the FAGF 110 completes the connection to the FN-RG 100.

### Third Unclaimed Embodiment - Determination by AUSF 130

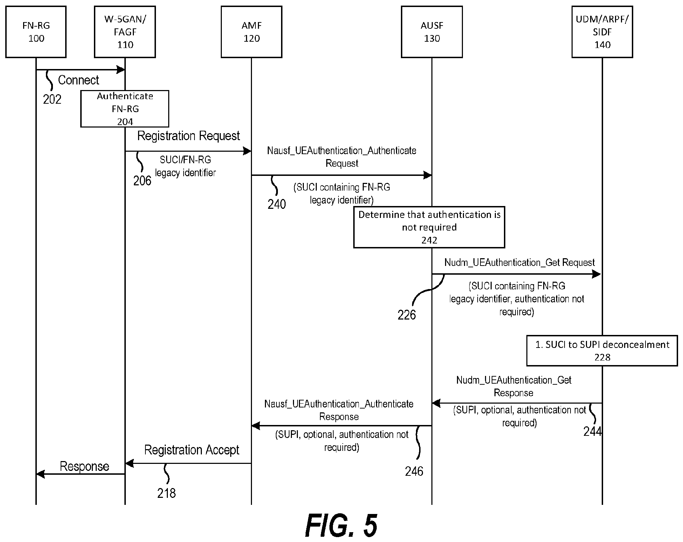

**Figure 5** illustrates a procedure for registering an FN-RG 100 to a 5G network according to a third unclaimed embodiment. As shown in **Figure 5****,** an FN-RG 100 establishes a layer 2 (L2) connection 20 to an FAGF 110 that may be implemented, for example, in a W-5GAN. The FN-RG 100 is authenticated by the W-5GAN (block 204). This may be based, for example, a LinelD associated with the FN-RG 100 that is inserted to a DHCP request.

Assuming that the FN-RG 100 is authenticated based on the line ID, the FAGF 110 selects an AMF 120 and sends an initial NAS registration request 206 to the AMF 120 on behalf of the FN-RG 100. The FAGF 110 may use the line ID to obtain the required 5GC parameters (e.g. NSSAI) that are needed to be able to send NAS signaling to 5GC and to perform initial AMF 120 selection. In particular, the FAGF 110 may use the LinelD or other identifier of the FN-RG 100 to build the SUCI that is included in the registration request 206. Accordingly, the SUCI may include the LinedID or other identifier of the FN-RG 100. The NAS registration message may be sent using same N2 mechanisms as defined in [5] for N3GPP access as described in [2].

The AMF 120 then constructs an authentication request 240 (NAUSF 130_UEAuthentication_Authenticate Request) including the SUCI that carries the FN-RG 100 identifier. The AMF 120 selects an AUSF 130 based on information received in the SUCI and transmits the authentication request to the AUSF 130. The AMF 120 may interact with the PCF for obtaining the Access and Mobility policy for the FN-RG 100.

Upon receipt of the authentication request, in the third embodiment, the AUSF 130 determines whether authentication is required for the request (block 242).

In these embodiments, the AUSF 130 could be preconfigured with the necessary information in order to determine that for particular devices, authentication is not required. Such configuration information could be for example the list of FN-RG 100 related identifiers and that are entitled to be served without authentication.

In these embodiments, the involvement of the UDM 140 is not necessarily required. In other terms, in another embodiment, the interactions between the AUSF 130 and the UDM 140 shown in **Figure 5** are not performed.

In yet another embodiment, the action pertaining to determining whether or not an authentication is required may be based on a special interaction with the UDM 140. This could be realized by a new procedure with new messages. For example, the procedure could be a simple exchange of new authentication required request/response messages between the AUSF 130 and the UDM 140. The AUSF 130 could provide the received FN-RG 100 identifier in the request and the UDM 140 could respond accordingly by acting on the received information and request as described above.

The AUSF 130 then constructs an authentication get request 226 (NUDM 140_UEAuthentication_Get Request) including the SUCI that carries the FN-RG 100 identifier and transmits the authentication get request 226 to the UDM 140. The authentication get request 226 also indicates that authentication is not required for this FN-RG 100.

Upon receipt of the authentication get request 226 from the AUSF 130, the UDM 140 performs SUCI to SUPI deconcealment (block 228). The UDM 140 responds to the authentication get request with an authentication get response 244 to the AUSF 130 including the SUPI.

Upon receipt of the authentication get response 244, the AUSF 130 responds to the authentication request from the AMF 120 with an authentication response 246 to the AMF 120 including the SUPI.

The AMF 120 then transmits a Registration Accept 218 message to the FAGF 110, and the FAGF 110 completes the connection to the FN-RG 100.

### Establishing NAS security with dummy parameters

In the three embodiments described above, an additional option is to distribute dummy parameters (AV, K_{SEAF}) for the establishment of NAS security between the AMF 120 and the FAGF 110 (network entity between AMF 120 and FN-RG 100).

To reduce the impact on the AMF 120 and since the AMF 120 is always expecting a security key K_{SEAF} upon a successful authentication run, some embodiments provide that the AUSF 130 sends a successful authentication indication as described in [1] including a dummy K_{SEAF} key. This key could be defined as a constant or could be based on the FN-RG 100 related identifier. The AMF 120 would then setup NAS security with the FAGF 110 (or other network entity emulating the NAS protocol on behalf of the FN-RG 100 device) based on the same key.

Moreover, in some embodiments, the UDM 140 may send a dummy Authentication Vector (AV) to the AUSF 130. In general, authentication vector is a tuple of parameters that provides temporary authentication data. The AV may include elements, such as a network challenge (RAND), an expected user response termed XRES (Expected Response), CK (Cipher Key), IK (Integrity Key) and/or AUTN (Authentication Token), etc.

Either or both options can be used. The dummy AV can be defined (e.g., in the specification) as a constant or could be based on the FN-RG 100 related identifier.

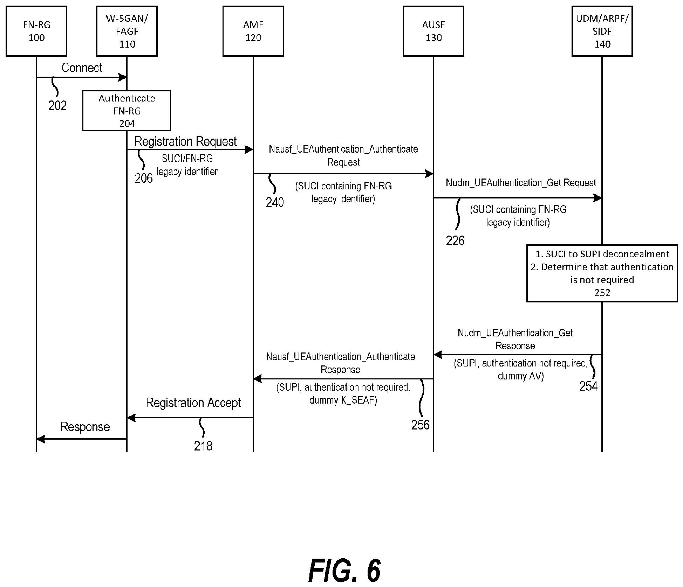

Accordingly, **Figure 6** illustrates a variation of the first embodiment described above in which the UDM 140 makes the determination at block 252 that authentication of the FN-RG 100 is not required. In that case, the UDM 140 may include a dummy authentication vector (AV) in the authentication get response message 254 to the AUSF 130. Likewise, the AUSF 130 may include a dummy KSEAF in the authenticate response 256 that is sent to the AMF 120.

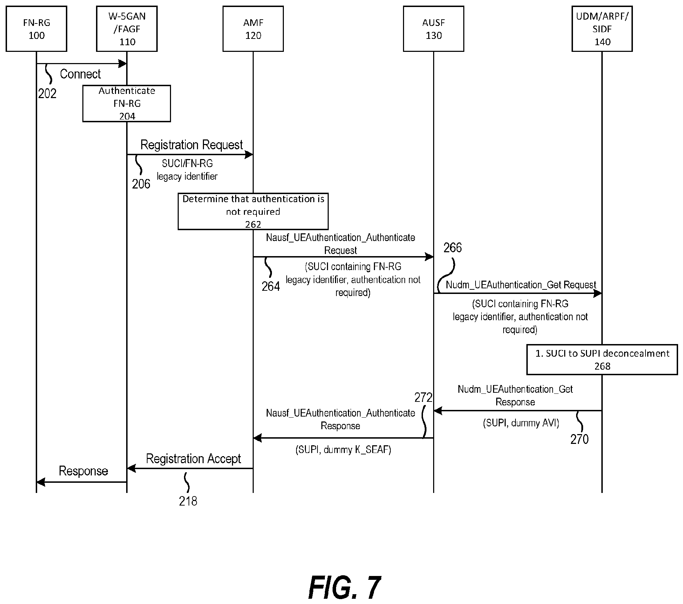

**Figure 7** illustrates a variation of the second embodiment described above in which the AMF 120 makes the determination that authentication of the FN-RG 100 is not required. In that case, the UDM 140 may include a dummy authentication vector (AV) in the authentication get response message to the AUSF 130. Likewise, the AUSF 130 may include a dummy K_{SEAF} in the authenticate response that is sent to the AMF 120.

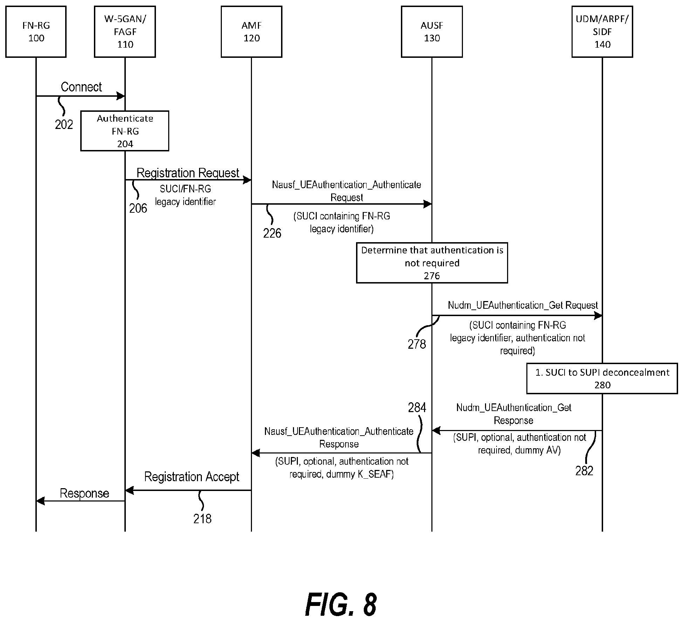

**Figure 8** illustrates a variation of the third embodiment described above in which the AUSF 130 makes the determination at block 276 that authentication of the FN-RG 100 is not required. In that case, the UDM 140 may include a dummy authentication vector (AV) in the authentication get response message 282 to the AUSF 130. Likewise, the AUSF 130 may include a dummy KSEAF in the authenticate response 284 that is sent to the AMF 120.

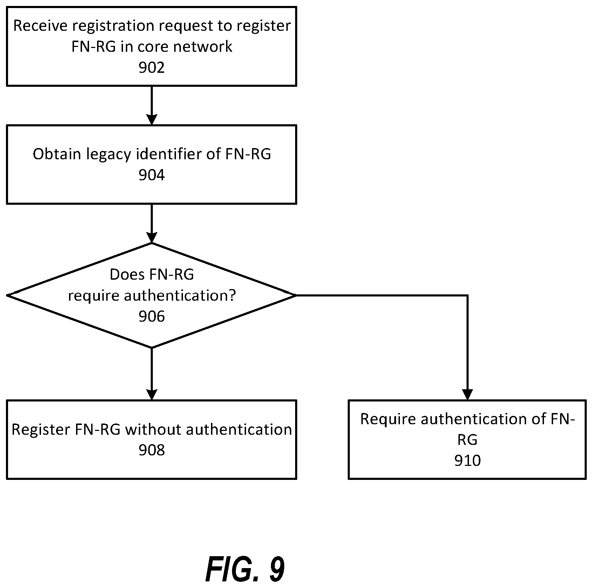

**Figure 9** is a flowchart illustrating operations of elements of a 5G core network according to some embodiments.

Referring to **Figure 9****,** operations of a 5G core network according to some embodiments include receiving (902) a registration request to register a fixed network residential gateway, FN-RG, to the core network, obtaining (904) an identifier of the FN-RG, determining (906), based on the identifier of the FN-RG, whether authentication of the FN-RG is required. If the CN determines that authentication of the FN-RG is not required, the CN registers (908) the FN-RG to the CN without authentication. Otherwise the CN may require authentication of the FN-RG before registration, or alternatively, the CN may refuse to register the FN-RG.

In some embodiments, the method may include receiving an indication from a fixed access gateway function, FAGF, that the FN-RG is authentic, and determining that authentication of the FN-RG is not required may be performed partly based on the indication from the FAGF. The indication may include a flag or other field sent along with the registration request or otherwise associated with the registration request.

The identifier may include a line ID associated with the FN-RG, and the registration request may be received from a Fixed Access Gateway Function, FAGF, of the core network. The identifier may be included within a subscriber concealed identity, SUCI, contained in the registration request.

In some embodiments, the determination of whether authentication of the FN-RG is required may be made in a United Data Management, UDM, function of the core network. The may further include receiving, at the UDM, an authentication get request from a Subscriber Authentication Function, AUSF, function of the core network, the authentication get request including the identifier of the FN-RG.

The identifier of the FN-RG may be included within a subscriber concealed identity, SUCI, associated with the FN-RG, and the method further include deconcealing, by the UDM, the SUCI to obtain a subscriber permanent identity, SUPI, associated with the FN-RG.

The method may further include transmitting an authentication get response to the AUSF, the authentication get response including the SUPI. The authentication get response may include an indication that authorization is not required for the FN-RG. The authentication get response may further include a dummy authentication vector to be used for non-access stratum communications within the core network on behalf of the FN-RG.

In some unclaimed embodiments, determining that authentication of the FN-RG is not required may be performed in an Access and Mobility Management Function, AMF, function of the core network. In particular, the identifier of the FN-RG is included within a subscriber concealed identity, SUCI, associated with the FN-RG, and the method may further include transmitting an authenticate request from the AMF to a subscriber authorization function, AUSF, of the core network, the authenticate request including the SUCI and an indication that authentication is not required for the FN-RG, and receiving at the AMF an authenticate response from the AUSF including a subscriber permanent identifier, SUPI, associated with the FN-RG.

The method may further include transmitting a registration accept message to the FAGF in response to receiving the authenticate response, the registration accept message including the SUPI.

The authenticate response may include a dummy Security Anchor Function, SEAF, key, KSEAF, to be used for non-access stratum communications within the core network on behalf of the FN-RG, and the method may further include transmitting a registration accept message to the FAGF in response to receiving the authenticate response, the registration accept message including the SUPI and the dummy SEAF key KSEAF.

In some unclaimed embodiments, the determination of whether authentication of the FN-RG is required may be performed in a Subscriber Authentication Function, AUSF, function of the core network. The method may further include transmitting an authenticate get request from the AUSF to a United Data Management, UDM, function of the core network, the authenticate get request including the SUCI and an indication that authentication is not required for the FN-RG, and receiving at the AUSF an authenticate get response from the UDM, the authenticate get response including a subscriber permanent identifier, SUPI, associated with the FN-RG.

The authenticate get response may include a dummy authentication vector to be used for non-access stratum communications within the core network on behalf of the FN-RG. The authenticate get response may further include an indication that authentication is not required for the FN-RG.

The method may further include receiving, at the AUSF, an authenticate request from an Access and Mobility Management Function, AMF, in the core network, the authenticate request including a subscriber concealed identity, SUCI, associated with the FN-RG, and transmitting an authenticate response to the AMF, the authenticate response including a subscriber permanent identity, SUPI, associated with the FN-RG.

The method may further include transmitting a dummy Security Anchor Function, SEAF, key, KSEAF, to be used for non-access stratum communications within the core network on behalf of the FN-RG to the AMF in the authenticate response.

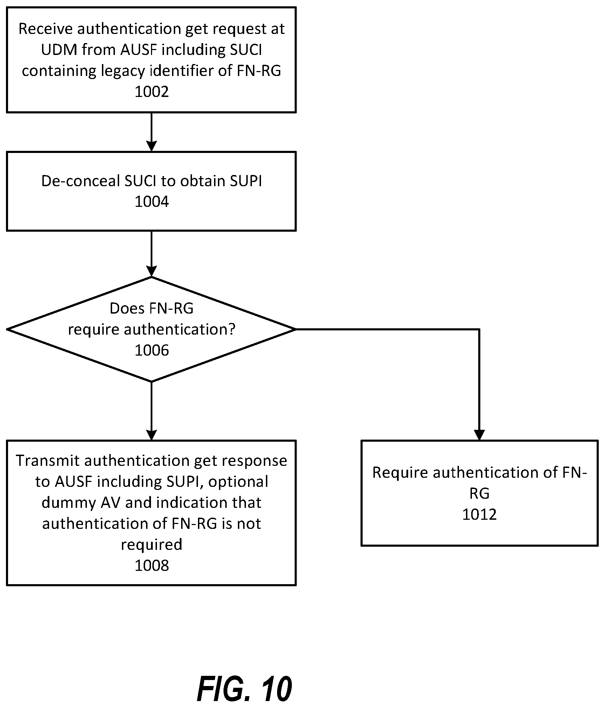

**Figure 10** is a flowchart illustrating operations of a UDM function of a 5G core network according to some embodiments.

Referring to **Figure 10****,** a method in a United Data Management, UDM, function of a core network of a wireless communication system includes receiving (1002), at the UDM, an authentication get request from a Subscriber Authentication Function, AUSF, function of the core network, the authentication get request requesting authentication of a fixed network residential gateway, FN-RG and including a identifier of the FN-RG. The identifier of the FN-RG may be included within a subscriber concealed identity, SUCI, associated with the FN-RG, and the method may include deconcealing (1004), by the UDM, the SUCI to obtain a subscriber permanent identity, SUPI, associated with the FN-RG. The method further includes determining (1006), based on the identifier of the FN-RG, that authentication of the FN-RG is not required, and, if authentication of the FN-RG is not required, transmitting (1008) an authentication get response to the AUSF, the authentication get response including an indication that authentication of the FN-RG is not required. If the UDM determines that authentication of the FN-RG is required, the UDM may send an appropriate response to the authentication get request to require authentication (1012) and/or refuse the authentication get request.

The authentication get request may include an indication that authorization is not required for the FN-RG. The authentication get response may further include a dummy authentication vector to be used for non-access stratum communications within the core network on behalf of the FN-RG.

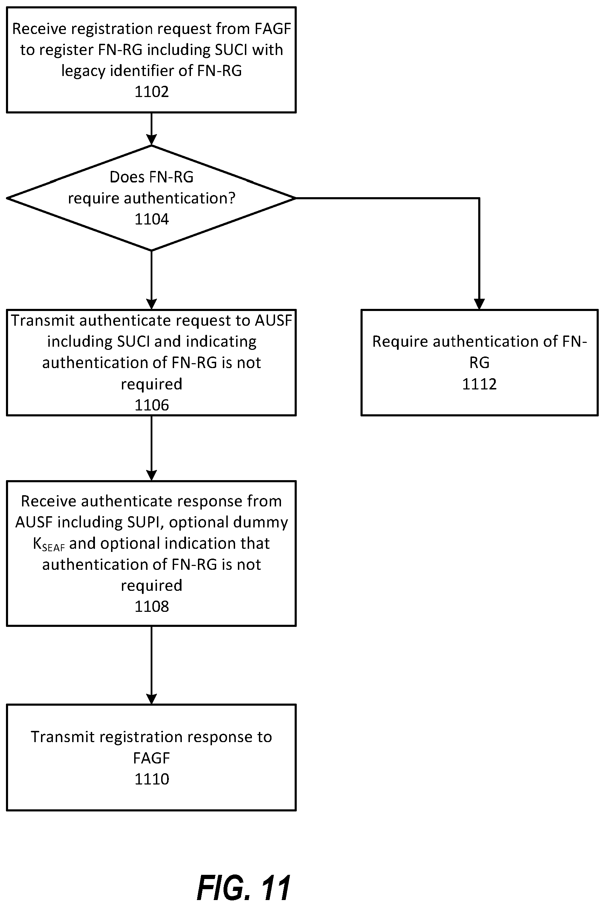

**Figure 11** is a flowchart illustrating operations of an AMF function of a 5G core network according to some unclaimed embodiments.

Referring to **Figure 11****,** a method in an Access and Mobility Management Function, AMF, function of a core network of a wireless communication system, includes receiving (1102), at the AMF, a registration request to register a fixed network residential gateway, FN-RG, to the core network, the registration request including an identifier of the FN-RG, and determining (1104), based on the identifier of the FN-RG, whether authentication of the FN-RG is required. If the AMF determines that authentication of the FN-RG is required, the AMF may send an appropriate response to the registration request to require authentication (1112) and/or refuse the registration request.

The method further includes registering the FN-RG without authentication in response to determining that authentication of the FN-RG is not required. In particular, as shown in **Figure 11****,** the identifier of the FN-RG may be included within a subscriber concealed identity, SUCI, associated with the FN-RG, and the method may further include transmitting (1106) an authenticate request from the AMF to a subscriber authorization function, AUSF, of the core network, the authenticate request including the SUCI, and (1108) receiving at the AMF an authenticate response from the AUSF, the authenticate response including a subscriber permanent identifier, SUPI, associated with the FN-RG and an indication that authentication is not required for the FN-RG.

The method may further include transmitting (1110) a registration accept message to the FAGF in response to receiving the authenticate response, the registration accept message including the SUPI.

The authenticate response may include a dummy Security Anchor Function, SEAF, key, KSEAF, to be used for non-access stratum communications within the core network on behalf of the FN-RG, and the method may further include transmitting (1110) a registration response message to the FAGF in response to receiving the authenticate response, the registration accept message including the SUPI and the dummy SEAF key KSEAF.

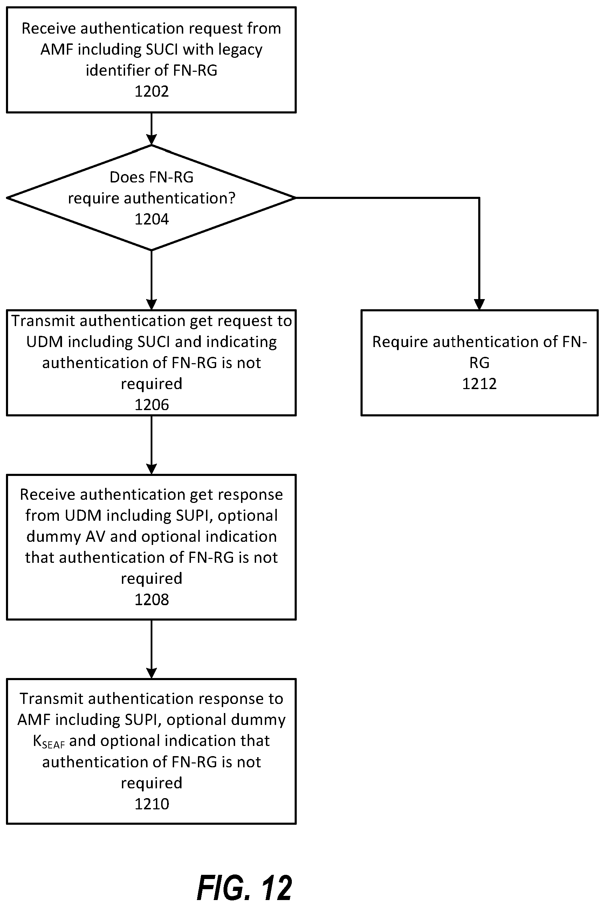

**Figure 12** is a flowchart illustrating operations of an AUSF function of a 5G core network according to some unclaimed embodiments.

Referring to **Figure 12****,** a method in a subscriber authentication function, AUSF, of a core network of a wireless communication system, includes receiving (1202), at the AUSF, an authenticate request from an Access and Mobility Management Function, AMF, in the core network, the authenticate request including an identifier of a fixed node residential gateway, FN-RG, and determining (1204), based on the identifier of the FN-RG, whether authentication is required for the FN-RG. If the AUSF determines that authentication of the FN-RG is required, the AUSF may send an appropriate response to the authenticate request to require authentication (1212) and/or refuse the authenticate request.

The method further includes transmitting (1206) an authenticate get request from the AUSF to a United Data Management, UDM, function of the core network, the authenticate get request including the SUCI and an indication that authentication is not required for the FN-RG, and receiving (1208) at the AUSF an authenticate get response from the UDM, the authenticate get response including a subscriber permanent identifier, SUPI, associated with the FN-RG.

The method further includes transmitting (1210) an authenticate response to the AMF, the authenticate response including an indication that authentication is not required for the FN-RG.

The authenticate get response may include an indication that authentication is not required for the FN-RG.

In some embodiments, the authenticate get response includes a dummy authentication vector to be used for non-access stratum communications within the core network on behalf of the FN-RG.

The may further include transmitting a dummy Security Anchor Function, SEAF, key, KSEAF, to be used for non-access stratum communications within the core network on behalf of the FN-RG to the AMF in the authenticate response.

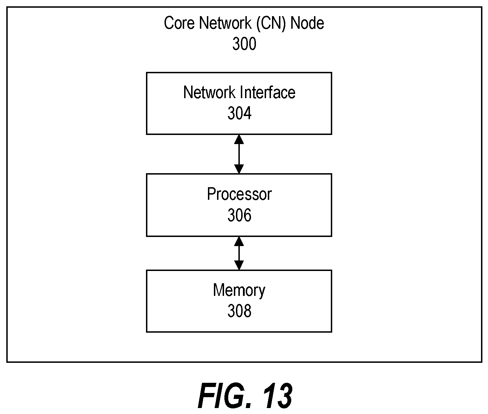

**Figure 13** is a block diagram of a network node according to some embodiments. Various embodiments provide a core network node (CN node) that includes a processor circuit 306 a transceiver 302 coupled to the processor circuit, and a memory 308 coupled to the processor circuit. The memory 308 includes machine-readable computer program instructions that, when executed by the processor circuit, cause the processor circuit to perform some of the operations depicted in **Figures 3-12****.**

**Figure 13** depicts an example of a core network node 300 of a core network, such as a 5GC or EPC core network. As shown, network node 300 a network interface circuit 304 (also referred to as a network interface) configured to provide communications with other nodes (e.g., with other base stations and/or core network nodes) of the wireless communication network. The network node 300 may also include a processor circuit 306 (also referred to as a processor) and a memory circuit 308 (also referred to as memory) coupled to the processor circuit 306. The memory circuit 308 may include computer readable program code that when executed by the processor circuit 306 causes the processor circuit to perform operations according to embodiments disclosed herein. According to other embodiments, processor circuit 306 may be defined to include memory so that a separate memory circuit is not required.

As discussed herein, operations of the network node 300 may be performed by processor 306 and/or network interface 304. For example, processor 306 may control network interface 304 to transmit communications through network interface 304 to one or more other network nodes and/or to receive communications through network interface from one or more other network nodes. Moreover, modules may be stored in memory 308, and these modules may provide instructions so that when instructions of a module are executed by processor 306, processor 306 performs respective operations (e.g., operations discussed herein with respect to example embodiments). In addition, a structure similar to that of **Figure 13** may be used to implement other network nodes. Moreover, network nodes discussed herein may be implemented as virtual network nodes.

Accordingly, a network node 300 (or radio access network (RAN) node 300) according to some embodiments includes a processor circuit 306 and a memory 308 coupled to the processor circuit, the memory including machine readable program instructions that, when executed by the processor circuit, cause the network node to perform operations described herein.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

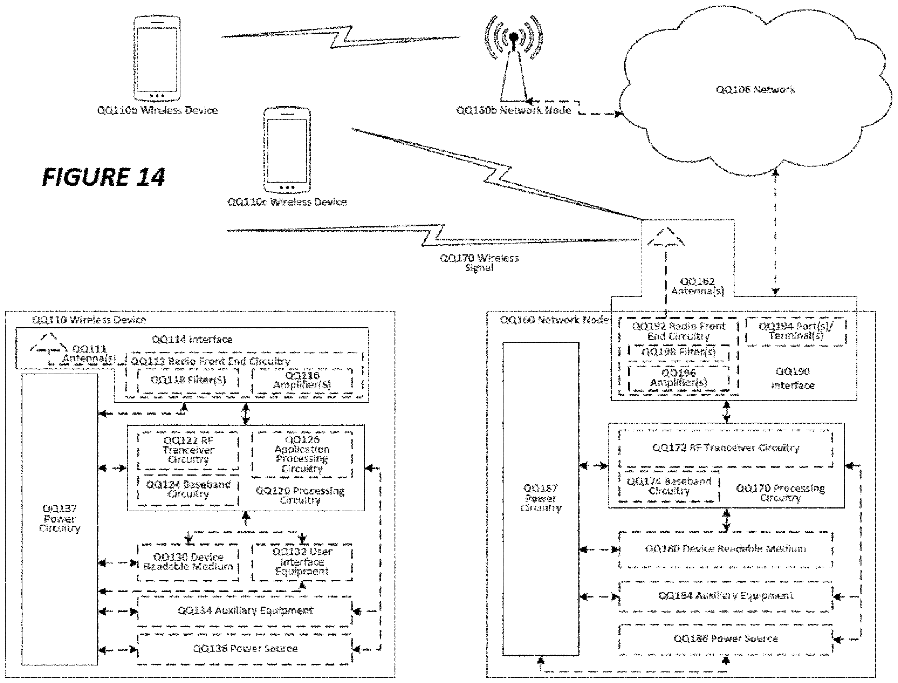

Figure 14: A wireless network in accordance with some embodiments.

Although the subject matter described herein may be implemented in any appropriate type of system using any suitable components, the embodiments disclosed herein are described in relation to a wireless network, such as the example wireless network illustrated in **Figure 14****.** For simplicity, the wireless network of **Figure 14** only depicts network QQ106, network nodes QQ160 and QQ160b, and WDs QQ110, QQ110b, and QQ110c (also referred to as mobile terminals). In practice, a wireless network may further include any additional elements suitable to support communication between wireless devices or between a wireless device and another communication device, such as a landline telephone, a service provider, or any other network node or end device. Of the illustrated components, network node QQ160 and wireless device (WD) QQ110 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network QQ106 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices.

Network node QQ160 and WD QQ110 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In **Figure 14****,** network node QQ160 includes processing circuitry QQ170, device readable medium QQ180, interface QQ190, auxiliary equipment QQ184, power source QQ186, power circuitry QQ187, and antenna QQ162. Although network node QQ160 illustrated in the example wireless network of **Figure 14** may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node QQ160 are depicted as single boxes located within a larger box, or nested within multiple boxes, in practice, a network node may comprise multiple different physical components that make up a single illustrated component (e.g., device readable medium QQ180 may comprise multiple separate hard drives as well as multiple RAM modules).

Similarly, network node QQ160 may be composed of multiple physically separate components (e.g., a NodeB component and a RNC component, or a BTS component and a BSC component, etc.), which may each have their own respective components. In certain scenarios in which network node QQ160 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node QQ160 may be configured to support multiple radio access technologies (RATs). In such embodiments, some components may be duplicated (e.g., separate device readable medium QQ180 for the different RATs) and some components may be reused (e.g., the same antenna QQ162 may be shared by the RATs). Network node QQ160 may also include multiple sets of the various illustrated components for different wireless technologies integrated into network node QQ160, such as, for example, GSM, WCDMA, LTE, NR, WiFi, or Bluetooth wireless technologies. These wireless technologies may be integrated into the same or different chip or set of chips and other components within network node QQ160.

Processing circuitry QQ170 is configured to perform any determining, calculating, or similar operations (e.g., certain obtaining operations) described herein as being provided by a network node. These operations performed by processing circuitry QQ170 may include processing information obtained by processing circuitry QQ170 by, for example, converting the obtained information into other information, comparing the obtained information or converted information to information stored in the network node, and/or performing one or more operations based on the obtained information or converted information, and as a result of said processing making a determination.

Processing circuitry QQ170 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node QQ160 components, such as device readable medium QQ180, network node QQ160 functionality. For example, processing circuitry QQ170 may execute instructions stored in device readable medium QQ180 or in memory within processing circuitry QQ170. Such functionality may include providing any of the various wireless features, functions, or benefits discussed herein. In some embodiments, processing circuitry QQ170 may include a system on a chip (SOC).

In some embodiments, processing circuitry QQ170 may include one or more of radio frequency (RF) transceiver circuitry QQ172 and baseband processing circuitry QQ174. In some embodiments, radio frequency (RF) transceiver circuitry QQ172 and baseband processing circuitry QQ174 may be on separate chips (or sets of chips), boards, or units, such as radio units and digital units. In alternative embodiments, part or all of RF transceiver circuitry QQ172 and baseband processing circuitry QQ174 may be on the same chip or set of chips, boards, or units.

In certain embodiments, some or all of the functionality described herein as being provided by a network node, base station, eNB or other such network device may be performed by processing circuitry QQ170 executing instructions stored on device readable medium QQ180 or memory within processing circuitry QQ170. In alternative embodiments, some or all of the functionality may be provided by processing circuitry QQ170 without executing instructions stored on a separate or discrete device readable medium, such as in a hard-wired manner. In any of those embodiments, whether executing instructions stored on a device readable storage medium or not, processing circuitry QQ170 can be configured to perform the described functionality. The benefits provided by such functionality are not limited to processing circuitry QQ170 alone or to other components of network node QQ160, but are enjoyed by network node QQ160 as a whole, and/or by end users and the wireless network generally.

Device readable medium QQ180 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry QQ170. Device readable medium QQ180 may store any suitable instructions, data or information, including a computer program, software, an application including one or more of logic, rules, code, tables, etc. and/or other instructions capable of being executed by processing circuitry QQ170 and, utilized by network node QQ160. Device readable medium QQ180 may be used to store any calculations made by processing circuitry QQ170 and/or any data received via interface QQ190. In some embodiments, processing circuitry QQ170 and device readable medium QQ180 may be considered to be integrated.

Interface QQ190 is used in the wired or wireless communication of signalling and/or data between network node QQ160, network QQ106, and/or WDs QQ110. As illustrated, interface QQ190 comprises port(s)/terminal(s) QQ194 to send and receive data, for example to and from network QQ106 over a wired connection. Interface QQ190 also includes radio front end circuitry QQ192 that may be coupled to, or in certain embodiments a part of, antenna QQ162. Radio front end circuitry QQ192 comprises filters QQ198 and amplifiers QQ196. Radio front end circuitry QQ192 may be connected to antenna QQ162 and processing circuitry QQ170. Radio front end circuitry may be configured to condition signals communicated between antenna QQ162 and processing circuitry QQ170. Radio front end circuitry QQ192 may receive digital data that is to be sent out to other network nodes or WDs via a wireless connection. Radio front end circuitry QQ192 may convert the digital data into a radio signal having the appropriate channel and bandwidth parameters using a combination of filters QQ198 and/or amplifiers QQ196. The radio signal may then be transmitted via antenna QQ162. Similarly, when receiving data, antenna QQ162 may collect radio signals which are then converted into digital data by radio front end circuitry QQ192. The digital data may be passed to processing circuitry QQ170. In other embodiments, the interface may comprise different components and/or different combinations of components.

In certain alternative embodiments, network node QQ160 may not include separate radio front end circuitry QQ192, instead, processing circuitry QQ170 may comprise radio front end circuitry and may be connected to antenna QQ162 without separate radio front end circuitry QQ192. Similarly, in some embodiments, all or some of RF transceiver circuitry QQ172 may be considered a part of interface QQ190. In still other embodiments, interface QQ190 may include one or more ports or terminals QQ194, radio front end circuitry QQ192, and RF transceiver circuitry QQ172, as part of a radio unit (not shown), and interface QQ190 may communicate with baseband processing circuitry QQ174, which is part of a digital unit (not shown).

Antenna QQ162 may include one or more antennas, or antenna arrays, configured to send and/or receive wireless signals. Antenna QQ162 may be coupled to radio front end circuitry QQ192 and may be any type of antenna capable of transmitting and receiving data and/or signals wirelessly. In some embodiments, antenna QQ162 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna QQ162 may be separate from network node QQ160 and may be connectable to network node QQ160 through an interface or port.

Antenna QQ162, interface QQ190, and/or processing circuitry QQ170 may be configured to perform any receiving operations and/or certain obtaining operations described herein as being performed by a network node. Any information, data and/or signals may be received from a wireless device, another network node and/or any other network equipment. Similarly, antenna QQ162, interface QQ190, and/or processing circuitry QQ170 may be configured to perform any transmitting operations described herein as being performed by a network node. Any information, data and/or signals may be transmitted to a wireless device, another network node and/or any other network equipment.

Power circuitry QQ187 may comprise, or be coupled to, power management circuitry and is configured to supply the components of network node QQ160 with power for performing the functionality described herein. Power circuitry QQ187 may receive power from power source QQ186. Power source QQ186 and/or power circuitry QQ187 may be configured to provide power to the various components of network node QQ160 in a form suitable for the respective components (e.g., at a voltage and current level needed for each respective component). Power source QQ186 may either be included in, or external to, power circuitry QQ187 and/or network node QQ160. For example, network node QQ160 may be connectable to an external power source (e.g., an electricity outlet) via an input circuitry or interface such as an electrical cable, whereby the external power source supplies power to power circuitry QQ187. As a further example, power source QQ186 may comprise a source of power in the form of a battery or battery pack which is connected to, or integrated in, power circuitry QQ187. The battery may provide backup power should the external power source fail. Other types of power sources, such as photovoltaic devices, may also be used.

Alternative embodiments of network node QQ160 may include additional components beyond those shown in **Figure 14** that may be responsible for providing certain aspects of the network node's functionality, including any of the functionality described herein and/or any functionality necessary to support the subject matter described herein. For example, network node QQ160 may include user interface equipment to allow input of information into network node QQ160 and to allow output of information from network node QQ160. This may allow a user to perform diagnostic, maintenance, repair, and other administrative functions for network node QQ160.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-loT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device QQ110 includes antenna QQ111, interface QQ114, processing circuitry QQ120, device readable medium QQ130, user interface equipment QQ132, auxiliary equipment QQ134, power source QQ136 and power circuitry QQ137. WD QQ110 may include multiple sets of one or more of the illustrated components for different wireless technologies supported by WD QQ110, such as, for example, GSM, WCDMA, LTE, NR, WiFi, WiMAX, or Bluetooth wireless technologies, just to mention a few. These wireless technologies may be integrated into the same or different chips or set of chips as other components within WD QQ110.

Antenna QQ111 may include one or more antennas or antenna arrays, configured to send and/or receive wireless signals, and is connected to interface QQ114. In certain alternative embodiments, antenna QQ111 may be separate from WD QQ110 and be connectable to WD QQ110 through an interface or port. Antenna QQ111, interface QQ114, and/or processing circuitry QQ120 may be configured to perform any receiving or transmitting operations described herein as being performed by a WD. Any information, data and/or signals may be received from a network node and/or another WD. In some embodiments, radio front end circuitry and/or antenna QQ111 may be considered an interface.

As illustrated, interface QQ114 comprises radio front end circuitry QQ112 and antenna QQ111. Radio front end circuitry QQ112 comprise one or more filters QQ118 and amplifiers QQ116. Radio front end circuitry QQ112 is connected to antenna QQ111 and processing circuitry QQ120, and is configured to condition signals communicated between antenna QQ111 and processing circuitry QQ120. Radio front end circuitry QQ112 may be coupled to or a part of antenna QQ111. In some embodiments, WD QQ110 may not include separate radio front end circuitry QQ112; rather, processing circuitry QQ120 may comprise radio front end circuitry and may be connected to antenna QQ111. Similarly, in some embodiments, some or all of RF transceiver circuitry QQ122 may be considered a part of interface QQ114. Radio front end circuitry QQ112 may receive digital data that is to be sent out to other network nodes or WDs via a wireless connection. Radio front end circuitry QQ112 may convert the digital data into a radio signal having the appropriate channel and bandwidth parameters using a combination of filters QQ118 and/or amplifiers QQ116. The radio signal may then be transmitted via antenna QQ111. Similarly, when receiving data, antenna QQ111 may collect radio signals which are then converted into digital data by radio front end circuitry QQ112. The digital data may be passed to processing circuitry QQ120. In other embodiments, the interface may comprise different components and/or different combinations of components.

Processing circuitry QQ120 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD QQ110 components, such as device readable medium QQ130, WD QQ110 functionality. Such functionality may include providing any of the various wireless features or benefits discussed herein. For example, processing circuitry QQ120 may execute instructions stored in device readable medium QQ130 or in memory within processing circuitry QQ120 to provide the functionality disclosed herein.

As illustrated, processing circuitry QQ120 includes one or more of RF transceiver circuitry QQ122, baseband processing circuitry QQ124, and application processing circuitry QQ126. In other embodiments, the processing circuitry may comprise different components and/or different combinations of components. In certain embodiments processing circuitry QQ120 of WD QQ110 may comprise a SOC. In some embodiments, RF transceiver circuitry QQ122, baseband processing circuitry QQ124, and application processing circuitry QQ126 may be on separate chips or sets of chips. In alternative embodiments, part or all of baseband processing circuitry QQ124 and application processing circuitry QQ126 may be combined into one chip or set of chips, and RF transceiver circuitry QQ122 may be on a separate chip or set of chips. In still alternative embodiments, part or all of RF transceiver circuitry QQ122 and baseband processing circuitry QQ124 may be on the same chip or set of chips, and application processing circuitry QQ126 may be on a separate chip or set of chips. In yet other alternative embodiments, part or all of RF transceiver circuitry QQ122, baseband processing circuitry QQ124, and application processing circuitry QQ126 may be combined in the same chip or set of chips. In some embodiments, RF transceiver circuitry QQ122 may be a part of interface QQ114. RF transceiver circuitry QQ122 may condition RF signals for processing circuitry QQ120.

In certain embodiments, some or all of the functionality described herein as being performed by a WD may be provided by processing circuitry QQ120 executing instructions stored on device readable medium QQ130, which in certain embodiments may be a computer-readable storage medium. In alternative embodiments, some or all of the functionality may be provided by processing circuitry QQ120 without executing instructions stored on a separate or discrete device readable storage medium, such as in a hard-wired manner. In any of those particular embodiments, whether executing instructions stored on a device readable storage medium or not, processing circuitry QQ120 can be configured to perform the described functionality. The benefits provided by such functionality are not limited to processing circuitry QQ120 alone or to other components of WD QQ110, but are enjoyed by WD QQ110 as a whole, and/or by end users and the wireless network generally.

Processing circuitry QQ120 may be configured to perform any determining, calculating, or similar operations (e.g., certain obtaining operations) described herein as being performed by a WD. These operations, as performed by processing circuitry QQ120, may include processing information obtained by processing circuitry QQ120 by, for example, converting the obtained information into other information, comparing the obtained information or converted information to information stored by WD QQ110, and/or performing one or more operations based on the obtained information or converted information, and as a result of said processing making a determination.

Device readable medium QQ130 may be operable to store a computer program, software, an application including one or more of logic, rules, code, tables, etc. and/or other instructions capable of being executed by processing circuitry QQ120. Device readable medium QQ130 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry QQ120. In some embodiments, processing circuitry QQ120 and device readable medium QQ130 may be considered to be integrated. User interface equipment QQ132 may provide components that allow for a human user to interact with WD QQ110. Such interaction may be of many forms, such as visual, audial, tactile, etc. User interface equipment QQ132 may be operable to produce output to the user and to allow the user to provide input to WD QQ110. The type of interaction may vary depending on the type of user interface equipment QQ132 installed in WD QQ110. For example, if WD QQ110 is a smart phone, the interaction may be via a touch screen; if WD QQ110 is a smart meter, the interaction may be through a screen that provides usage (e.g., the number of gallons used) or a speaker that provides an audible alert (e.g., if smoke is detected). User interface equipment QQ132 may include input interfaces, devices and circuits, and output interfaces, devices and circuits. User interface equipment QQ132 is configured to allow input of information into WD QQ110, and is connected to processing circuitry QQ120 to allow processing circuitry QQ120 to process the input information. User interface equipment QQ132 may include, for example, a microphone, a proximity or other sensor, keys/buttons, a touch display, one or more cameras, a USB port, or other input circuitry. User interface equipment QQ132 is also configured to allow output of information from WD QQ110, and to allow processing circuitry QQ120 to output information from WD QQ110. User interface equipment QQ132 may include, for example, a speaker, a display, vibrating circuitry, a USB port, a headphone interface, or other output circuitry. Using one or more input and output interfaces, devices, and circuits, of user interface equipment QQ132, WD QQ110 may communicate with end users and/or the wireless network, and allow them to benefit from the functionality described herein.

Auxiliary equipment QQ134 is operable to provide more specific functionality which may not be generally performed by WDs. This may comprise specialized sensors for doing measurements for various purposes, interfaces for additional types of communication such as wired communications etc. The inclusion and type of components of auxiliary equipment QQ134 may vary depending on the embodiment and/or scenario.

Power source QQ136 may, in some embodiments, be in the form of a battery or battery pack. Other types of power sources, such as an external power source (e.g., an electricity outlet), photovoltaic devices or power cells, may also be used. WD QQ110 may further comprise power circuitry QQ137 for delivering power from power source QQ136 to the various parts of WD QQ110 which need power from power source QQ136 to carry out any functionality described or indicated herein. Power circuitry QQ137 may in certain embodiments comprise power management circuitry. Power circuitry QQ137 may additionally or alternatively be operable to receive power from an external power source; in which case WD QQ110 may be connectable to the external power source (such as an electricity outlet) via input circuitry or an interface such as an electrical power cable. Power circuitry QQ137 may also in certain embodiments be operable to deliver power from an external power source to power source QQ136. This may be, for example, for the charging of power source QQ136. Power circuitry QQ137 may perform any formatting, converting, or other modification to the power from power source QQ136 to make the power suitable for the respective components of WD QQ110 to which power is supplied.

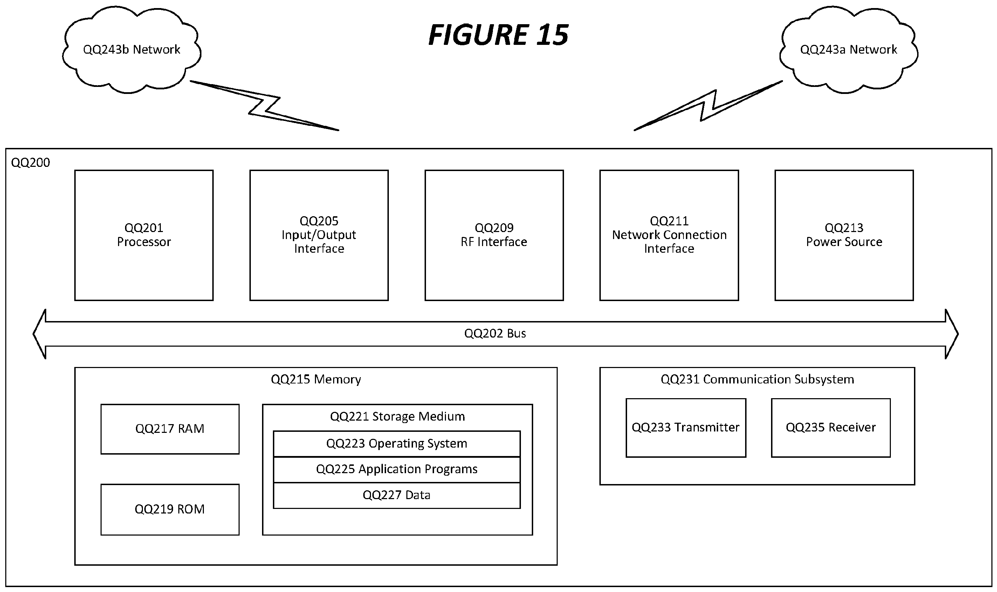

### Figure 15: User Equipment in accordance with some embodiments

Figure 15 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE QQ2200 may be any UE identified by the 3rd Generation Partnership Project (3GPP), including a NB-loT UE, a machine type communication (MTC) UE, and/or an enhanced MTC (eMTC) UE. UE QQ200, as illustrated in **Figure 15****,** is one example of a WD configured for communication in accordance with one or more communication standards promulgated by the 3rd Generation Partnership Project (3GPP), such as 3GPP's GSM, UMTS, LTE, and/or 5G standards. As mentioned previously, the term WD and UE may be used interchangeable. Accordingly, although **Figure 15** is a UE, the components discussed herein are equally applicable to a WD, and vice-versa.

In **Figure 15****,** UE QQ200 includes processing circuitry QQ201 that is operatively coupled to input/output interface QQ205, radio frequency (RF) interface QQ209, network connection interface QQ211, memory QQ215 including random access memory (RAM) QQ217, read-only memory (ROM) QQ219, and storage medium QQ221 or the like, communication subsystem QQ231, power source QQ213, and/or any other component, or any combination thereof. Storage medium QQ221 includes operating system QQ223, application program QQ225, and data QQ227. In other embodiments, storage medium QQ221 may include other similar types of information. Certain UEs may utilize all of the components shown in **Figure 15****,** or only a subset of the components. The level of integration between the components may vary from one UE to another UE. Further, certain UEs may contain multiple instances of a component, such as multiple processors, memories, transceivers, transmitters, receivers, etc.

In **Figure 15****,** processing circuitry QQ201 may be configured to process computer instructions and data. Processing circuitry QQ201 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry QQ201 may include two central processing units (CPUs). Data may be information in a form suitable for use by a computer.

In the depicted embodiment, input/output interface QQ205 may be configured to provide a communication interface to an input device, output device, or input and output device. UE QQ200 may be configured to use an output device via input/output interface QQ205. An output device may use the same type of interface port as an input device. For example, a USB port may be used to provide input to and output from UE QQ200. The output device may be a speaker, a sound card, a video card, a display, a monitor, a printer, an actuator, an emitter, a smartcard, another output device, or any combination thereof. UE QQ200 may be configured to use an input device via input/output interface QQ205 to allow a user to capture information into UE QQ200. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In **Figure 15****,** RF interface QQ209 may be configured to provide a communication interface to RF components such as a transmitter, a receiver, and an antenna. Network connection interface QQ211 may be configured to provide a communication interface to network QQ243a. Network QQ243a may encompass wired and/or wireless networks such as a local-area network (LAN), a wide-area network (WAN), a computer network, a wireless network, a telecommunications network, another like network or any combination thereof. For example, network QQ243a may comprise a Wi-Fi network. Network connection interface QQ211 may be configured to include a receiver and a transmitter interface used to communicate with one or more other devices over a communication network according to one or more communication protocols, such as Ethernet, TCP/IP, SONET, ATM, or the like. Network connection interface QQ211 may implement receiver and transmitter functionality appropriate to the communication network links (e.g., optical, electrical, and the like). The transmitter and receiver functions may share circuit components, software or firmware, or alternatively may be implemented separately.

RAM QQ217 may be configured to interface via bus QQ202 to processing circuitry QQ201 to provide storage or caching of data or computer instructions during the execution of software programs such as the operating system, application programs, and device drivers. ROM QQ219 may be configured to provide computer instructions or data to processing circuitry QQ201. For example, ROM QQ219 may be configured to store invariant low-level system code or data for basic system functions such as basic input and output (I/O), startup, or reception of keystrokes from a keyboard that are stored in a non-volatile memory. Storage medium QQ221 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium QQ221 may be configured to include operating system QQ223, application program QQ225 such as a web browser application, a widget or gadget engine or another application, and data file QQ227. Storage medium QQ221 may store, for use by UE QQ200, any of a variety of various operating systems or combinations of operating systems.

Storage medium QQ221 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium QQ221 may allow UE QQ200 to access computer-executable instructions, application programs or the like, stored on transitory or non-transitory memory media, to off-load data, or to upload data. An article of manufacture, such as one utilizing a communication system may be tangibly embodied in storage medium QQ221, which may comprise a device readable medium.

In **Figure 15****,** processing circuitry QQ201 may be configured to communicate with network QQ243b using communication subsystem QQ231. Network QQ243a and network QQ243b may be the same network or networks or different network or networks. Communication subsystem QQ231 may be configured to include one or more transceivers used to communicate with network QQ243b. For example, communication subsystem QQ231 may be configured to include one or more transceivers used to communicate with one or more remote transceivers of another device capable of wireless communication such as another WD, UE, or base station of a radio access network (RAN) according to one or more communication protocols, such as IEEE 802.QQ2, CDMA, WCDMA, GSM, LTE, UTRAN, WiMax, or the like. Each transceiver may include transmitter QQ233 and/or receiver QQ235 to implement transmitter or receiver functionality, respectively, appropriate to the RAN links (e.g., frequency allocations and the like). Further, transmitter QQ233 and receiver QQ235 of each transceiver may share circuit components, software or firmware, or alternatively may be implemented separately.

In the illustrated embodiment, the communication functions of communication subsystem QQ231 may include data communication, voice communication, multimedia communication, short-range communications such as Bluetooth, near-field communication, location-based communication such as the use of the global positioning system (GPS) to determine a location, another like communication function, or any combination thereof. For example, communication subsystem QQ231 may include cellular communication, Wi-Fi communication, Bluetooth communication, and GPS communication. Network QQ243b may encompass wired and/or wireless networks such as a local-area network (LAN), a wide-area network (WAN), a computer network, a wireless network, a telecommunications network, another like network or any combination thereof. For example, network QQ243b may be a cellular network, a Wi-Fi network, and/or a near-field network. Power source QQ213 may be configured to provide alternating current (AC) or direct current (DC) power to components of UE QQ200.

The features, benefits and/or functions described herein may be implemented in one of the components of UE QQ200 or partitioned across multiple components of UE QQ200. Further, the features, benefits, and/or functions described herein may be implemented in any combination of hardware, software or firmware. In one example, communication subsystem QQ231 may be configured to include any of the components described herein. Further, processing circuitry QQ201 may be configured to communicate with any of such components over bus QQ202. In another example, any of such components may be represented by program instructions stored in memory that when executed by processing circuitry QQ201 perform the corresponding functions described herein. In another example, the functionality of any of such components may be partitioned between processing circuitry QQ201 and communication subsystem QQ231. In another example, the non-computationally intensive functions of any of such components may be implemented in software or firmware and the computationally intensive functions may be implemented in hardware.

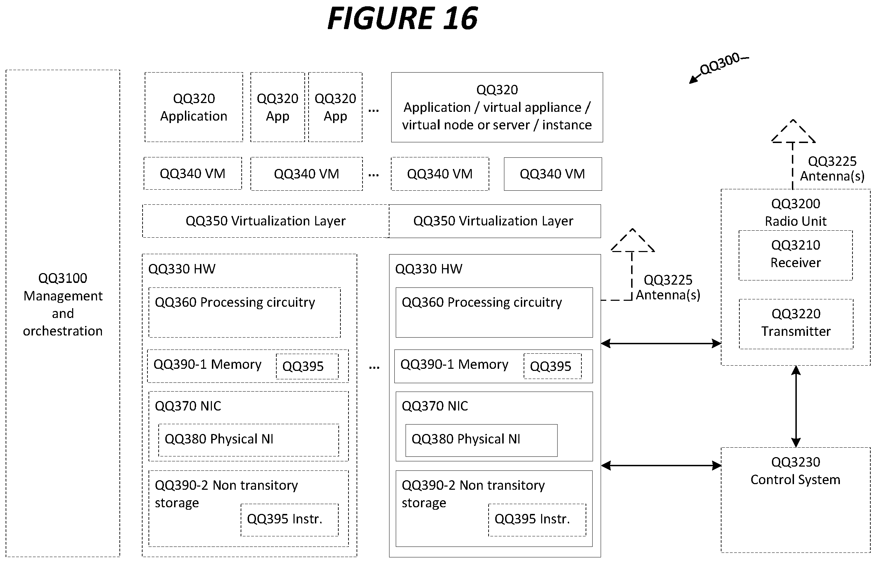

### Figure 16: Virtualization environment in accordance with some embodiments

Figure 16 is a schematic block diagram illustrating a virtualization environment QQ300 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments QQ300 hosted by one or more of hardware nodes QQ330. Further, in embodiments in which the virtual node is not a radio access node or does not require radio connectivity (e.g., a core network node), then the network node may be entirely virtualized.

The functions may be implemented by one or more applications QQ320 (which may alternatively be called software instances, virtual appliances, network functions, virtual nodes, virtual network functions, etc.) operative to implement some of the features, functions, and/or benefits of some of the embodiments disclosed herein. Applications QQ320 are run in virtualization environment QQ300 which provides hardware QQ330 comprising processing circuitry QQ360 and memory QQ390. Memory QQ390 contains instructions QQ395 executable by processing circuitry QQ360 whereby application QQ320 is operative to provide one or more of the features, benefits, and/or functions disclosed herein.

Virtualization environment QQ300, comprises general-purpose or special-purpose network hardware devices QQ330 comprising a set of one or more processors or processing circuitry QQ360, which may be commercial off-the-shelf (COTS) processors, dedicated Application Specific Integrated Circuits (ASICs), or any other type of processing circuitry including digital or analog hardware components or special purpose processors. Each hardware device may comprise memory QQ390-1 which may be non-persistent memory for temporarily storing instructions QQ395 or software executed by processing circuitry QQ360. Each hardware device may comprise one or more network interface controllers (NICs) QQ370, also known as network interface cards, which include physical network interface QQ380. Each hardware device may also include non-transitory, persistent, machine-readable storage media QQ390-2 having stored therein software QQ395 and/or instructions executable by processing circuitry QQ360. Software QQ395 may include any type of software including software for instantiating one or more virtualization layers QQ350 (also referred to as hypervisors), software to execute virtual machines QQ340 as well as software allowing it to execute functions, features and/or benefits described in relation with some embodiments described herein.

Virtual machines QQ340, comprise virtual processing, virtual memory, virtual networking or interface and virtual storage, and may be run by a corresponding virtualization layer QQ350 or hypervisor. Different embodiments of the instance of virtual appliance QQ320 may be implemented on one or more of virtual machines QQ340, and the implementations may be made in different ways.

During operation, processing circuitry QQ360 executes software QQ395 to instantiate the hypervisor or virtualization layer QQ350, which may sometimes be referred to as a virtual machine monitor (VMM). Virtualization layer QQ350 may present a virtual operating platform that appears like networking hardware to virtual machine QQ340.

As shown in **Figure 16****,** hardware QQ330 may be a standalone network node with generic or specific components. Hardware QQ330 may comprise antenna QQ3225 and may implement some functions via virtualization. Alternatively, hardware QQ330 may be part of a larger cluster of hardware (e.g. such as in a data center or customer premise equipment (CPE)) where many hardware nodes work together and are managed via management and orchestration (MANO) QQ3100, which, among others, oversees lifecycle management of applications QQ320.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine QQ340 may be a software implementation of a physical machine that runs programs as if they were executing on a physical, non-virtualized machine. Each of virtual machines QQ340, and that part of hardware QQ330 that executes that virtual machine, be it hardware dedicated to that virtual machine and/or hardware shared by that virtual machine with others of the virtual machines QQ340, forms a separate virtual network elements (VNE).

Still in the context of NFV, Virtual Network Function (VNF) is responsible for handling specific network functions that run in one or more virtual machines QQ340 on top of hardware networking infrastructure QQ330 and corresponds to application QQ320 in **Figure 16****.**

In some embodiments, one or more radio units QQ3200 that each include one or more transmitters QQ3220 and one or more receivers QQ3210 may be coupled to one or more antennas QQ3225. Radio units QQ3200 may communicate directly with hardware nodes QQ330 via one or more appropriate network interfaces and may be used in combination with the virtual components to provide a virtual node with radio capabilities, such as a radio access node or a base station.

In some embodiments, some signalling can be effected with the use of control system QQ3230 which may alternatively be used for communication between the hardware nodes QQ330 and radio units QQ3200.

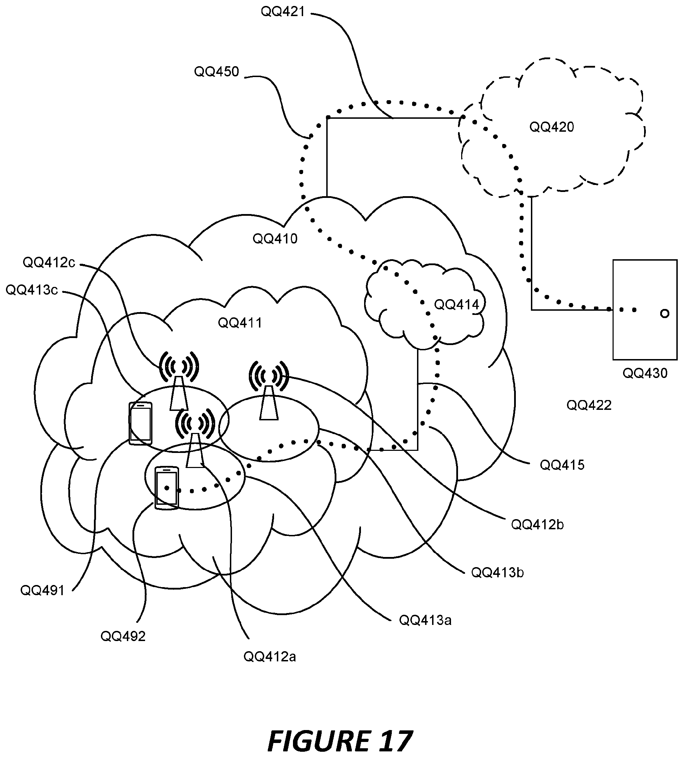

**Figure 17****:** Telecommunication network connected via an intermediate network to a host computer in accordance with some embodiments.

With reference to **Figure 17****,** in accordance with an embodiment, a communication system includes telecommunication network QQ410, such as a 3GPP-type cellular network, which comprises access network QQ411, such as a radio access network, and core network QQ414. Access network QQ411 comprises a plurality of base stations QQ412a, QQ412b, QQ412c, such as NBs, eNBs, gNBs or other types of wireless access points, each defining a corresponding coverage area QQ413a, QQ413b, QQ413c. Each base station QQ412a, QQ412b, QQ412c is connectable to core network QQ414 over a wired or wireless connection QQ415. A first UE QQ491 located in coverage area QQ413c is configured to wirelessly connect to, or be paged by, the corresponding base station QQ412c. A second UE QQ492 in coverage area QQ413a is wirelessly connectable to the corresponding base station QQ412a. While a plurality of UEs QQ491, QQ492 are illustrated in this example, the disclosed embodiments are equally applicable to a situation where a sole UE is in the coverage area or where a sole UE is connecting to the corresponding base station QQ412.

Telecommunication network QQ410 is itself connected to host computer QQ430, which may be embodied in the hardware and/or software of a standalone server, a cloud-implemented server, a distributed server or as processing resources in a server farm. Host computer QQ430 may be under the ownership or control of a service provider, or may be operated by the service provider or on behalf of the service provider. Connections QQ421 and QQ422 between telecommunication network QQ410 and host computer QQ430 may extend directly from core network QQ414 to host computer QQ430 or may go via an optional intermediate network QQ420. Intermediate network QQ420 may be one of, or a combination of more than one of, a public, private or hosted network; intermediate network QQ420, if any, may be a backbone network or the Internet; in particular, intermediate network QQ420 may comprise two or more sub-networks (not shown).

The communication system of **Figure 17** as a whole enables connectivity between the connected UEs QQ491, QQ492 and host computer QQ430. The connectivity may be described as an over-the-top (OTT) connection QQ450. Host computer QQ430 and the connected UEs QQ491, QQ492 are configured to communicate data and/or signaling via OTT connection QQ450, using access network QQ411, core network QQ414, any intermediate network QQ420 and possible further infrastructure (not shown) as intermediaries. OTT connection QQ450 may be transparent in the sense that the participating communication devices through which OTT connection QQ450 passes are unaware of routing of uplink and downlink communications. For example, base station QQ412 may not or need not be informed about the past routing of an incoming downlink communication with data originating from host computer QQ430 to be forwarded (e.g., handed over) to a connected UE QQ491. Similarly, base station QQ412 need not be aware of the future routing of an outgoing uplink communication originating from the UE QQ491 towards the host computer QQ430.

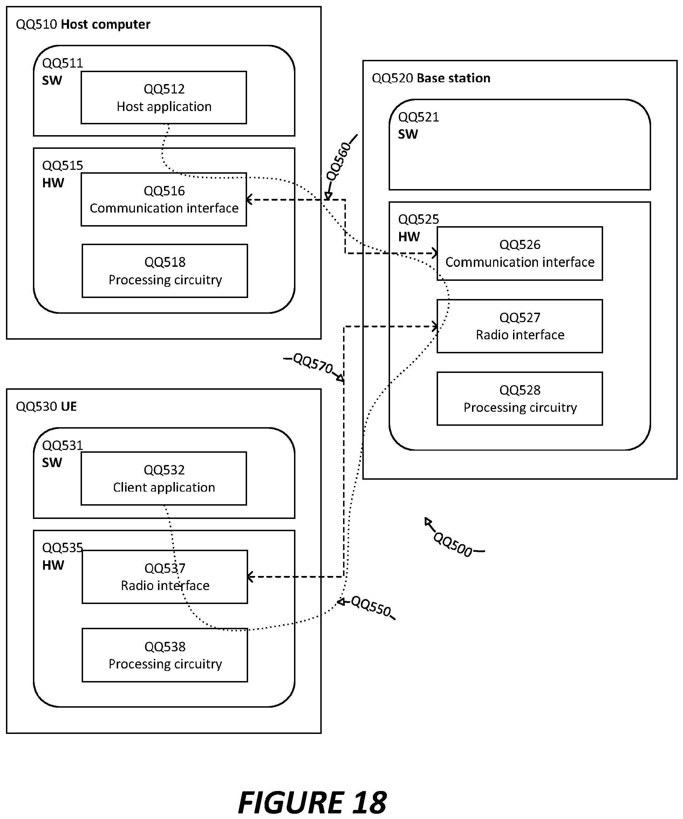

Figure 18: Host computer communicating via a base station with a user equipment over a partially wireless connection in accordance with some embodiments.

Example implementations, in accordance with an embodiment, of the UE, base station and host computer discussed in the preceding paragraphs will now be described with reference to **Figure 18****.** In communication system QQ500, host computer QQ510 comprises hardware QQ515 including communication interface QQ516 configured to set up and maintain a wired or wireless connection with an interface of a different communication device of communication system QQ500. Host computer QQ510 further comprises processing circuitry QQ518, which may have storage and/or processing capabilities. In particular, processing circuitry QQ518 may comprise one or more programmable processors, application-specific integrated circuits, field programmable gate arrays or combinations of these (not shown) adapted to execute instructions. Host computer QQ510 further comprises software QQ511, which is stored in or accessible by host computer QQ510 and executable by processing circuitry QQ518. Software QQ511 includes host application QQ512. Host application QQ512 may be operable to provide a service to a remote user, such as UE QQ530 connecting via OTT connection QQ550 terminating at UE QQ530 and host computer QQ510. In providing the service to the remote user, host application QQ512 may provide user data which is transmitted using OTT connection QQ550.

Communication system QQ500 further includes base station QQ520 provided in a telecommunication system and comprising hardware QQ525 enabling it to communicate with host computer QQ510 and with UE QQ530. Hardware QQ525 may include communication interface QQ526 for setting up and maintaining a wired or wireless connection with an interface of a different communication device of communication system QQ500, as well as radio interface QQ527 for setting up and maintaining at least wireless connection QQ570 with UE QQ530 located in a coverage area (not shown in **Figure 18**) served by base station QQ520. Communication interface QQ526 may be configured to facilitate connection QQ560 to host computer QQ510. Connection QQ560 may be direct or it may pass through a core network (not shown in **Figure 18**) of the telecommunication system and/or through one or more intermediate networks outside the telecommunication system. In the embodiment shown, hardware QQ525 of base station QQ520 further includes processing circuitry QQ528, which may comprise one or more programmable processors, application-specific integrated circuits, field programmable gate arrays or combinations of these (not shown) adapted to execute instructions. Base station QQ520 further has software QQ521 stored internally or accessible via an external connection.

Communication system QQ500 further includes UE QQ530 already referred to. Its hardware QQ535 may include radio interface QQ537 configured to set up and maintain wireless connection QQ570 with a base station serving a coverage area in which UE QQ530 is currently located. Hardware QQ535 of UE QQ530 further includes processing circuitry QQ538, which may comprise one or more programmable processors, application-specific integrated circuits, field programmable gate arrays or combinations of these (not shown) adapted to execute instructions. UE QQ530 further comprises software QQ531, which is stored in or accessible by UE QQ530 and executable by processing circuitry QQ538. Software QQ531 includes client application QQ532. Client application QQ532 may be operable to provide a service to a human or non-human user via UE QQ530, with the support of host computer QQ510. In host computer QQ510, an executing host application QQ512 may communicate with the executing client application QQ532 via OTT connection QQ550 terminating at UE QQ530 and host computer QQ510. In providing the service to the user, client application QQ532 may receive request data from host application QQ512 and provide user data in response to the request data. OTT connection QQ550 may transfer both the request data and the user data. Client application QQ532 may interact with the user to generate the user data that it provides.

It is noted that host computer QQ510, base station QQ520 and UE QQ530 illustrated in **Figure 18** may be similar or identical to host computer QQ430, one of base stations QQ412a, QQ412b, QQ412c and one of UEs QQ491, QQ492 of **Figure 17****,** respectively. This is to say, the inner workings of these entities may be as shown in **Figure 18** and independently, the surrounding network topology may be that of **Figure 17****.**

In **Figure 18****,** OTT connection QQ550 has been drawn abstractly to illustrate the communication between host computer QQ510 and UE QQ530 via base station QQ520, without explicit reference to any intermediary devices and the precise routing of messages via these devices. Network infrastructure may determine the routing, which it may be configured to hide from UE QQ530 or from the service provider operating host computer QQ510, or both. While OTT connection QQ550 is active, the network infrastructure may further take decisions by which it dynamically changes the routing (e.g., on the basis of load balancing consideration or reconfiguration of the network).

Wireless connection QQ570 between UE QQ530 and base station QQ520 is in accordance with the teachings of the embodiments described throughout this disclosure. One or more of the various embodiments may improve the performance of OTT services provided to UE QQ530 using OTT connection QQ550, in which wireless connection QQ570 forms the last segment. More precisely, the teachings of these embodiments may improve the deblock filtering for video processing and thereby provide benefits such as improved video encoding and/or decoding.

A measurement procedure may be provided for the purpose of monitoring data rate, latency and other factors on which the one or more embodiments improve. There may further be an optional network functionality for reconfiguring OTT connection QQ550 between host computer QQ510 and UE QQ530, in response to variations in the measurement results. The measurement procedure and/or the network functionality for reconfiguring OTT connection QQ550 may be implemented in software QQ511 and hardware QQ515 of host computer QQ510 or in software QQ531 and hardware QQ535 of UE QQ530, or both. In embodiments, sensors (not shown) may be deployed in or in association with communication devices through which OTT connection QQ550 passes; the sensors may participate in the measurement procedure by supplying values of the monitored quantities exemplified above, or supplying values of other physical quantities from which software QQ511, QQ531 may compute or estimate the monitored quantities. The reconfiguring of OTT connection QQ550 may include message format, retransmission settings, preferred routing etc.; the reconfiguring need not affect base station QQ520, and it may be unknown or imperceptible to base station QQ520. Such procedures and functionalities may be known and practiced in the art. In certain embodiments, measurements may involve proprietary UE signaling facilitating host computer QQ510's measurements of throughput, propagation times, latency and the like. The measurements may be implemented in that software QQ511 and QQ531 causes messages to be transmitted, in particular empty or 'dummy' messages, using OTT connection QQ550 while it monitors propagation times, errors etc.

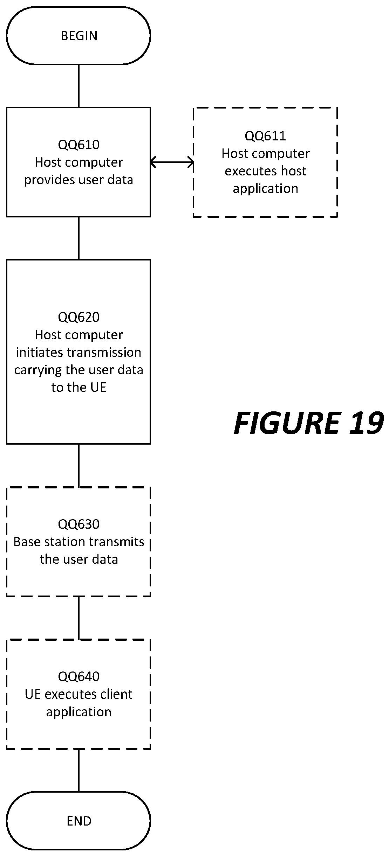

**Figure 19****:** Methods implemented in a communication system including a host computer, a base station and a user equipment in accordance with some embodiments.

**Figure 19** is a flowchart illustrating a method implemented in a communication system, in accordance with one embodiment. The communication system includes a host computer, a base station and a UE which may be those described with reference to **Figures 17** **and** **18**. For simplicity of the present disclosure, only drawing references to **Figure 19** will be included in this section. In step QQ610, the host computer provides user data. In substep QQ611 (which may be optional) of step QQ610, the host computer provides the user data by executing a host application. In step QQ620, the host computer initiates a transmission carrying the user data to the UE. In step QQ630 (which may be optional), the base station transmits to the UE the user data which was carried in the transmission that the host computer initiated, in accordance with the teachings of the embodiments described throughout this disclosure. In step QQ640 (which may also be optional), the UE executes a client application associated with the host application executed by the host computer.

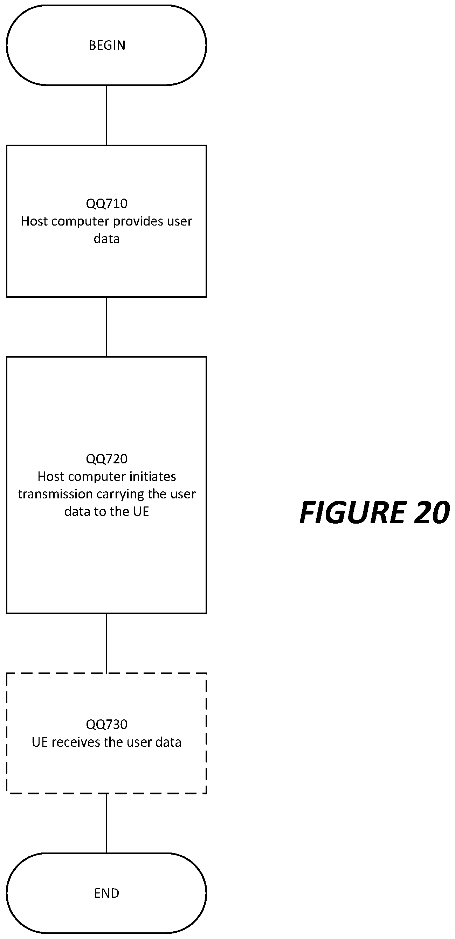

**Figure 20****:** Methods implemented in a communication system including a host computer, a base station and a user equipment in accordance with some embodiments.

**Figure 20** is a flowchart illustrating a method implemented in a communication system, in accordance with one embodiment. The communication system includes a host computer, a base station and a UE which may be those described with reference to **Figures 17** **and** **18****.** For simplicity of the present disclosure, only drawing references to **Figure 20** will be included in this section. In step QQ710 of the method, the host computer provides user data. In an optional substep (not shown) the host computer provides the user data by executing a host application. In step QQ720, the host computer initiates a transmission carrying the user data to the UE. The transmission may pass via the base station, in accordance with the teachings of the embodiments described throughout this disclosure. In step QQ730 (which may be optional), the UE receives the user data carried in the transmission.

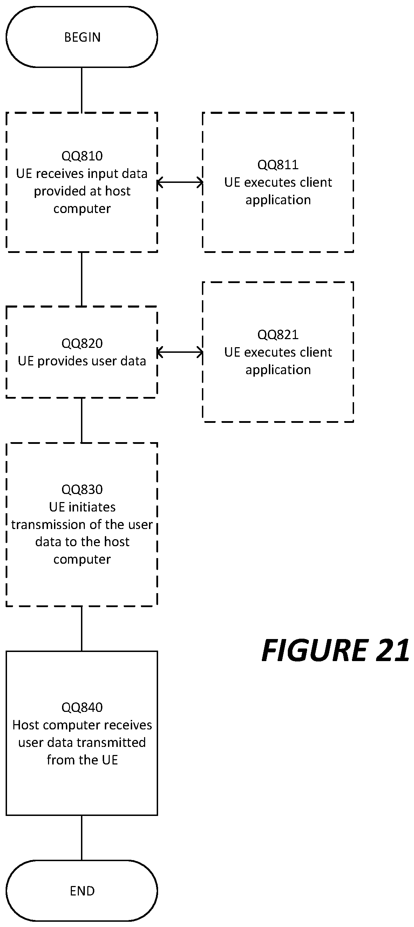

**Figure 21****:** Methods implemented in a communication system including a host computer, a base station and a user equipment in accordance with some embodiments.

**Figure 21** is a flowchart illustrating a method implemented in a communication system, in accordance with one embodiment. The communication system includes a host computer, a base station and a UE which may be those described with reference to **Figures 17** **and** **18****.** For simplicity of the present disclosure, only drawing references to **Figure 21** will be included in this section. In step QQ810 (which may be optional), the UE receives input data provided by the host computer. Additionally or alternatively, in step QQ820, the UE provides user data. In substep QQ821 (which may be optional) of step QQ820, the UE provides the user data by executing a client application. In substep QQ811 (which may be optional) of step QQ810, the UE executes a client application which provides the user data in reaction to the received input data provided by the host computer. In providing the user data, the executed client application may further consider user input received from the user. Regardless of the specific manner in which the user data was provided, the UE initiates, in substep QQ830 (which may be optional), transmission of the user data to the host computer. In step QQ840 of the method, the host computer receives the user data transmitted from the UE, in accordance with the teachings of the embodiments described throughout this disclosure.

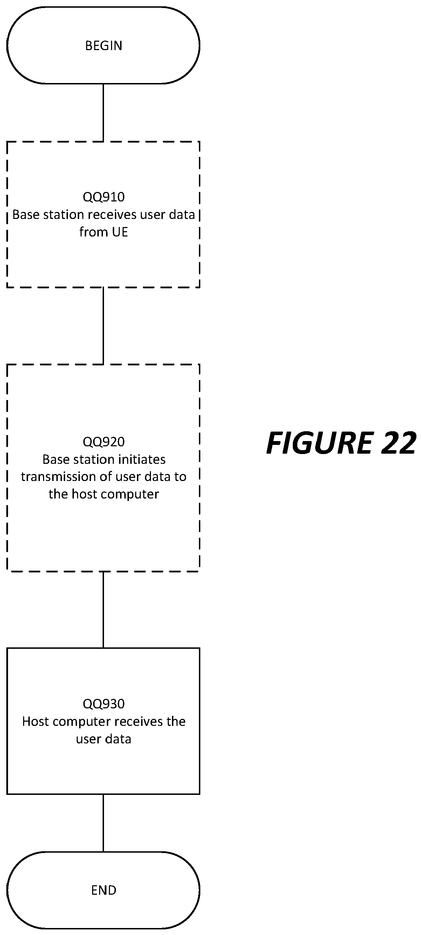

**Figure 22****:** Methods implemented in a communication system including a host computer, a base station and a user equipment in accordance with some embodiments.

**Figure 22** is a flowchart illustrating a method implemented in a communication system, in accordance with one embodiment. The communication system includes a host computer, a base station and a UE which may be those described with reference to **Figures 17** **and** **18****.** For simplicity of the present disclosure, only drawing references to **Figure 22** will be included in this section. In step QQ910 (which may be optional), in accordance with the teachings of the embodiments described throughout this disclosure, the base station receives user data from the UE. In step QQ920 (which may be optional), the base station initiates transmission of the received user data to the host computer. In step QQ930 (which may be optional), the host computer receives the user data carried in the transmission initiated by the base station.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

In the above-description of various embodiments of present inventive concepts, it is to be understood that the terminology used herein is for the purpose of describing particular embodiments only and is not intended to be limiting of present inventive concepts. Unless otherwise defined, all terms (including technical and scientific terms) used herein have the same meaning as commonly understood by one of ordinary skill in the art to which present inventive concepts belong. It will be further understood that terms, such as those defined in commonly used dictionaries, should be interpreted as having a meaning that is consistent with their meaning in the context of this specification and the relevant art and will not be interpreted in an idealized or overly formal sense unless expressly so defined herein.

When an element is referred to as being "connected", "coupled", "responsive", or variants thereof to another element, it can be directly connected, coupled, or responsive to the other element or intervening elements may be present. In contrast, when an element is referred to as being "directly connected", "directly coupled", "directly responsive", or variants thereof to another element, there are no intervening elements present. Like numbers refer to like elements throughout. Furthermore, "coupled", "connected", "responsive", or variants thereof as used herein may include wirelessly coupled, connected, or responsive. As used herein, the singular forms "a", "an" and "the" are intended to include the plural forms as well, unless the context clearly indicates otherwise. Well-known functions or constructions may not be described in detail for brevity and/or clarity. The term "and/or" includes any and all combinations of one or more of the associated listed items.

It will be understood that although the terms first, second, third, etc. may be used herein to describe various elements/operations, these elements/operations should not be limited by these terms. These terms are only used to distinguish one element/operation from another element/operation. Thus, a first element/operation in some embodiments could be termed a second element/operation in other embodiments without departing from the teachings of present inventive concepts. The same reference numerals or the same reference designators denote the same or similar elements throughout the specification.

As used herein, the terms "comprise", "comprising", "comprises", "include", "including", "includes", "have", "has", "having", or variants thereof are open-ended, and include one or more stated features, integers, elements, steps, components, or functions but does not preclude the presence or addition of one or more other features, integers, elements, steps, components, functions, or groups thereof. Furthermore, as used herein, the common abbreviation "e.g.", which derives from the Latin phrase "exempli gratia," may be used to introduce or specify a general example or examples of a previously mentioned item, and is not intended to be limiting of such item. The common abbreviation "i.e.", which derives from the Latin phrase "id est," may be used to specify a particular item from a more general recitation.

Example embodiments are described herein with reference to block diagrams and/or flowchart illustrations of computer-implemented methods, apparatus (systems and/or devices) and/or computer program products. It is understood that a block of the block diagrams and/or flowchart illustrations, and combinations of blocks in the block diagrams and/or flowchart illustrations, can be implemented by computer program instructions that are performed by one or more computer circuits. These computer program instructions may be provided to a processor circuit of a general purpose computer circuit, special purpose computer circuit, and/or other programmable data processing circuit to produce a machine, such that the instructions, which execute via the processor of the computer and/or other programmable data processing apparatus, transform and control transistors, values stored in memory locations, and other hardware components within such circuitry to implement the functions/acts specified in the block diagrams and/or flowchart block or blocks, and thereby create means (functionality) and/or structure for implementing the functions/acts specified in the block diagrams and/or flowchart block(s).

These computer program instructions may also be stored in a tangible computer-readable medium that can direct a computer or other programmable data processing apparatus to function in a particular manner, such that the instructions stored in the computer-readable medium produce an article of manufacture including instructions which implement the functions/acts specified in the block diagrams and/or flowchart block or blocks. Accordingly, embodiments of present inventive concepts may be embodied in hardware and/or in software (including firmware, resident software, micro-code, etc.) that runs on a processor such as a digital signal processor, which may collectively be referred to as "circuitry," "a module" or variants thereof.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated, and/or blocks/operations may be omitted without departing from the scope of inventive concepts. Moreover, although some of the diagrams include arrows on communication paths to show a primary direction of communication, it is to be understood that communication may occur in the opposite direction to the depicted arrows.

Many variations and modifications can be made to the embodiments without substantially departing from the principles of the present inventive concepts. All such variations and modifications are intended to be included herein within the scope of present inventive concepts. Accordingly, the above disclosed subject matter is to be considered illustrative, and not restrictive, and the examples of embodiments are intended to cover all such modifications, enhancements, and other embodiments, which fall within the scope of present inventive concepts. Thus, to the maximum extent allowed by law, the scope of present inventive concepts are to be determined by the broadest permissible interpretation of the present disclosure including the examples of embodiments and their equivalents, and shall not be restricted or limited by the foregoing detailed description.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

Explanations for abbreviations from the above disclosure are provided below.

| Abbreviation | Explanation |
|---|---|
| 3GPP | 3rd Generation Partnership Project |
| 5G | 5th Generation |
| AAA | Authentication, Authorization and Accounting |
| ABBA | Anti-Bidding down Between Architectures |
| AF | Application Function |
| AKA | Authentication and Key Agreement |
| AMF | Access and Mobility Management Function |
| AN | Access Network |
| AUSF | Authentication Server Function |
| ARPF | Authentication credential Repository and Processing Function |
| AS | Access Stratum |
| AV | Authentication Vector |
| BBF | Broadband Forum |
| CA | Certificate Authority |
| CN | Core Network |
| C-RNTI | Cell Radio Network Temporary Identifier |
| DN | Data Network |
| EAP | Extensible Authentication Protocol |
| EMSK | Extended Master Session Key |
| eNB | Evolved NodeB (a radio base station in LTE) |
| FAGF | Fixed Access Gateway Function |
| FN-RG | Fixed Network Residential Gateway |
| gNB | A radio base station in NR. |
| HPLMN | Home PLMN |
| HN | Home Network |
| IETF | Internet Engineering Task Force |
| KDF | Key Derivation Function |
| LTE | Long Term Evolution |
| MSB | Most Significant Bit |
| MSK | Master Session Key |
| ME | Mobile Equipment |
| MNC | Mobile Network Code |
| MCC | Mobile Country Code |
| NAS | Non-Access Stratum |
| NF | Network Function |
| NRF | NF Repository Function |
| NEF | Network Exposure Function |
| NSSF | Network Slice Selection Function |
| NPN | Non-Public Network |
| NR | New Radio |
| OCSP | Online Certificate Status Protocol |
| PCF | Policy Control Function |
| PLMN | Public Land Mobile Network |
| RAN | Radio Access Network |
| RFC | Request for Comments |
| SBA | Service Based Architecture |
| SLA | Service Level Agreement |
| SMF | Session Management Function |
| SEAF | SEcurity Anchor Function |
| SUPI | Subscriber Permanent Identity |
| SUCI | Subscriber Concealed Identity |
| TLS | Transaction Layer Security |
| USIM | Universal Subscriber Identity Module |
| UDM | United Data Management |
| UPF | User Plane Function |
| UE | User Equipment |
| VPLMN | Visitor PLMN |
| W-5GAN | Wireline 5G Access Node |
| X2 | Interface/reference point between two eNBs. |
| Xn | Interface/reference point between two gNBs. |

### References:

[1] 3GPP TS 33.501 v 15.3.1
[2] 3GPP TR 23.716 v. 16.0.0
[3] 3GPP TR 33.807 v. 0.3.0
[4] 3GPP TS 36.300 v. 15.4.0
[5] 3GPP TS 23.502 v. 15.4.1
[6] 3GPP TS 38.300 v. 15.4.0

## Claims

1. A method in a United Data Management, UDM, function of a core network of a wireless communication system, comprising:
receiving (1002), at the UDM, an authentication request from a Subscriber Authentication Function, AUSF, function of the core network, the authentication request requesting authentication of a fixed network residential gateway, FN-RG and including an identifier of the FN-RG;
determining (1006), based on the identifier of the FN-RG, that authentication of the FN-RG is not required, wherein the determining that authentication of the FN-RG is not required comprises determining that the identifier of the FN-RG is associated with a stored subscription or a stored profile that indicates that authentication is not required for the FN-RG; and
transmitting (1008) an authentication response to the AUSF, the authentication response including an indication that authentication of the FN-RG is not required.

2. The method of Claim 1, wherein the identifier of the FN-RG is included within a subscriber concealed identity, SUCI, associated with the FN-RG, and wherein the method further comprises:
deconcealing (1004), by the UDM, the SUCI to obtain a subscriber permanent identity, SUPI, associated with the FN-RG.

3. The method of Claim 1 or 2, wherein the authentication response further includes a dummy authentication vector to be used for non-access stratum communications with the core network on behalf of the FN-RG.

4. The method of any of Claims 1 to 3, wherein the authentication request comprises an authentication get request, and wherein the authentication response comprises an authentication get response.

5. A network node (300), comprising:
a processor circuitry (306);
a network interface (304) coupled to the processor circuit; and
a memory (308) coupled to the processor circuit, the memory comprising machine readable program instructions that, when executed by the processor circuit, cause the network node to perform operations comprising operations according to any of Claims 1 to 4.

6. A computer program comprising program code to be executed by processing circuitry (306) of a network node (300) configured to operate in a communication network, whereby execution of the program code causes the network node (300) to perform operations according to any of Claims 1 to 4.

7. A computer program product comprising a non-transitory storage medium including program code to be executed by processing circuitry (306) of a network node (300) configured to operate in a communication network, whereby execution of the program code causes the network node (300) to perform operations according to any of Claims 1 to 4.

## Patentansprüche

1. Verfahren in einer Funktion zum Unified Data Management, UDM, eines Kernnetzwerks eines drahtlosen Kommunikationssystems, umfassend:
Empfangen (1002), an dem UDM, einer Authentifizierungsanforderung von einer Funktion einer Subscriber Authentication Function, AUSF, des Kernnetzwerks, wobei die Authentifizierungsanforderung eine Authentifizierung eines Festnetz-Heim-Gateways, FN-RG, anfordert und eine Kennung des FN-RG beinhaltet;
Bestimmen (1006), basierend auf der Kennung des FN-RG, dass die Authentifizierung des FN-RG nicht erforderlich ist, wobei das Bestimmen, dass die Authentifizierung des FN-RG nicht erforderlich ist, Bestimmen, dass die Kennung des FN-RG einem gespeicherten Abonnement oder einem gespeicherten Profil, das angibt, dass die Authentifizierung für das FN-RG nicht erforderlich ist, zugeordnet ist, umfasst; und
Übertragen (1008) einer Authentifizierungsantwort an die AUSF, wobei die Authentifizierungsantwort eine Angabe, dass die Authentifizierung des FN-RG nicht erforderlich ist, beinhaltet.

2. Verfahren nach Anspruch 1, wobei die Kennung des FN-RG innerhalb einer Subscriber Concealed Identifier, SUCI, die dem FN-RG zugeordnet ist, enthalten ist und wobei das Verfahren ferner Folgendes umfasst:
Offenlegen (1004), durch das UDM, der SUCI, um eine Subscriber Permanent Identifier, SUPI, zu erhalten, die dem FN-RG zugeordnet ist.

3. Verfahren nach Anspruch 1 oder 2, wobei die Authentifizierungsantwort ferner einen Dummy-Authentifizierungsvektor beinhaltet, der für Non-Access-Stratum-Kommunikationen mit dem Kernnetzwerk im Namen des FN-RG zu verwenden ist.

4. Verfahren nach einem der Ansprüche 1 bis 3, wobei die Authentifizierungsanforderung eine Anforderung zum Erhalten einer Authentifizierung umfasst und wobei die Authentifizierungsantwort eine Antwort zum Erhalten einer Authentifizierung umfasst.

5. Netzwerkknoten (300), umfassend:
eine Prozessorschaltung (306);
eine Netzwerkschnittstelle (304), die an die Prozessorschaltung gekoppelt ist; und
Speicher (308), der an die Prozessorschaltung gekoppelt ist, wobei der Speicher maschinenlesbare Programmanweisungen umfasst, die bei Ausführung durch die Prozessorschaltung den Netzwerkknoten dazu veranlassen, Vorgänge durchzuführen, die Vorgänge nach einem der Ansprüche 1 bis 4 umfassen.

6. Computerprogramm, umfassend Programmcode, der durch eine Verarbeitungsschaltung (306) eines Netzwerkknotens (300) auszuführen ist, der dazu konfiguriert ist, in einem Kommunikationsnetzwerk zu arbeiten, wobei die Ausführung des Programmcodes den Netzwerkknoten (300) dazu veranlasst, Vorgänge nach einem der Ansprüche 1 bis 4 durchzuführen.

7. Computerprogrammprodukt, umfassend ein nichttransitorisches Speichermedium, das Programmcode beinhaltet, der durch eine Verarbeitungsschaltung (306) eines Netzwerkknotens (300) auszuführen ist, der dazu konfiguriert ist, in einem Kommunikationsnetzwerk zu arbeiten, wobei die Ausführung des Programmcodes den Netzwerkknoten (300) dazu veranlasst, Vorgänge nach einem der Ansprüche 1 bis 4 durchzuführen.

## Revendications

1. Procédé dans une fonction de gestion de données unifiée, UDM, d'un réseau central d'un système de communication sans fil, comprenant :
la réception (1002), au niveau de l'UDM, d'une demande d'authentification provenant d'une fonction d'authentification d'abonné, AUSF, fonction du réseau central, la demande d'authentification demandant l'authentification d'une passerelle résidentielle de réseau fixe, FN-RG et incluant un identifiant de la FN-RG ;
la détermination (1006), sur la base de l'identifiant de la FN-RG, que l'authentification de la FN-RG n'est pas requise, la détermination selon laquelle l'authentification de la FN-RG n'est pas requise comprenant la détermination que l'identifiant de la FN-RG est associé à un abonnement stocké ou à un profil stocké qui indique que l'authentification n'est pas requise pour la FN-RG ; et
la transmission (1008) d'une réponse d'authentification à l'AUSF, la réponse d'authentification comprenant une indication que l'authentification n'est pas requise pour la FN-RG.

2. Procédé selon la revendication 1, dans lequel l'identifiant de la FN-RG est inclus dans une identité masquée d'abonné, SUCI, associée à la FN-RG, et dans lequel le procédé comprend en outre :
le démasquage (1004), par l'UDM, de la SUCI pour obtenir une identité permanente d'abonné, SUPI, associée à la FN-RG.

3. Procédé selon la revendication 1 ou 2, dans lequel la réponse d'authentification comprend en outre un vecteur d'authentification factice à utiliser pour les communications de strate de non-accès avec le réseau central au nom de la FN-RG.

4. Procédé selon l'une quelconque des revendications 1 à 3, dans lequel la demande d'authentification comprend une demande d'obtention d'authentification, et dans lequel la réponse d'authentification comprend une réponse d'obtention d'authentification.

5. Nœud de réseau (300), comprenant :
un circuit de traitement (306) ;
une interface réseau (304) couplée au circuit de traitement ; et
une mémoire (308) couplée au circuit de traitement, la mémoire comprenant des instructions de programme lisibles par machine qui, lorsqu'elles sont exécutées par le circuit de traitement, amènent le nœud de réseau à effectuer des opérations comprenant des opérations selon l'une quelconque des revendications 1 à 4.

6. Programme informatique comprenant un code de programme à exécuter par un circuit de traitement (306) d'un nœud de réseau (300) configuré pour fonctionner dans un réseau de communication, l'exécution du code de programme amenant le nœud de réseau (300) à effectuer des opérations selon l'une quelconque des revendications 1 à 4.

7. Produit de programme informatique comprenant un support de stockage non transitoire incluant un code de programme à exécuter par un circuit de traitement (306) d'un nœud de réseau (300) configuré pour fonctionner dans un réseau de communication, l'exécution du code de programme amenant le nœud de réseau (300) à effectuer des opérations selon l'une quelconque des revendications 1 à 4.
